# EUROPÄISCHE PATENTSCHRIFT

(11) **EP 3 698 225 B1**
(45) Veröffentlichungstag und Bekanntmachung des Hinweises auf die Patenterteilung: **21.06.2023**
(21) Anmeldenummer: 19701828.6
(22) Anmeldetag: 24.01.2019
(51) Int. Cl.: G05B 19/4099, B29C 64/153, B29C 64/393, B33Y 50/02, B22F 10/28, B22F 10/36, B22F 12/44, B22F 10/30

(54) **VERFAHREN UND VORRICHTUNG ZUR BEREITSTELLUNG EINES STEUERBEFEHLSSATZES**
METHOD AND DEVICE FOR PROVIDING A CONTROL COMMAND SET
PROCÉDÉ ET DISPOSITIF DE PRÉPARATION D'UN JEU D'INSTRUCTIONS DE COMMANDE

(30) Priorität: 05.02.2018 DE 102018201739
(43) Veröffentlichungstag der Anmeldung: 26.08.2020
(73) Patentinhaber: EOS GmbH Electro Optical Systems, 82152 Krailling (DE)
(72) Erfinder: GÖTH, Michael, 81677 München (DE); LEUTERER, Martin, 82140 Olching (DE)
(74) Vertreter: Prüfer & Partner mbB Patentanwälte · Rechtsanwälte
(86) Internationale Anmeldenummer: PCT/EP2019/051727
(87) Internationale Veröffentlichungsnummer: WO 2019/149612

(56) Entgegenhaltungen:
- EP-A1- 3 094 471
- EP-A2- 1 400 982
- EP-B1- 3 094 471

## Beschreibung

Die Erfindung betrifft ein Verfahren und eine Vorrichtung zur Bereitstellung eines Steuerbefehlssatzes zur Herstellung mindestens eines dreidimensionalen Objekts mittels einer additiven Herstellvorrichtung, ein entsprechendes Herstellverfahren sowie ein entsprechendes Computerprogramm.

WO 2015/106836 A1 beschreibt die Verarbeitung von dreidimensionalen Objektdaten eines mittels eines additiven Herstellverfahrens herzustellenden Objekts. Insbesondere wird dabei eine geometrische Transformation der Daten durchgeführt, um durch den additiven Herstellvorgang hervorgerufene Verzerrungen der Objektgeometrie kompensieren zu können.

EP 1 400 982 A2 beschreibt ein Verfahren zur Herstellung eines Streustrahlenrasters oder Kollimators für eine Strahlungsart, der aus einem Grundkörper vorgebbarer Geometrie mit Durchgangskanälen für Primärstrahlung der Strahlungsart gebildet ist, wobei sich die Durchgangskanäle zwischen zwei gegenüberliegenden Oberflächen des Grundkörpers erstrecken. Bei der Herstellung mittels der Rapid-Prototyping-Technik wird der Grundkörper aus einem Aufbaumaterial, das für die Strahlungsart im Wesentlichen durchlässig ist, hergestellt. Innenflächen des Grundkörpers in den Durchgangskanälen werden dann mit einem die Strahlungsart stark absorbierenden Material beschichtet.

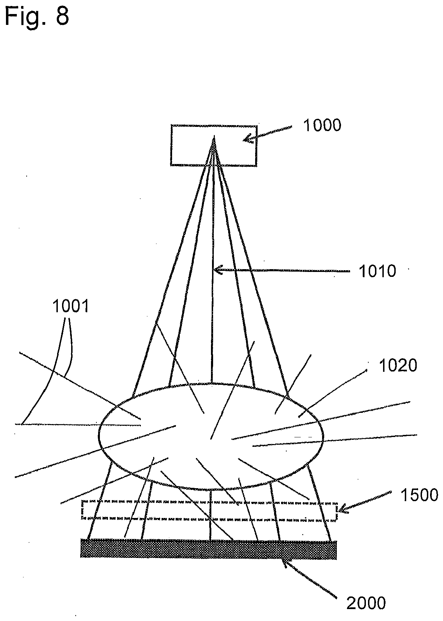

Additive Herstellverfahren, wie beispielsweise das Lasersintern oder -schmelzen, die Stereolithographie oder das 3D-Drucken, sind dadurch gekennzeichnet, dass herzustellende Objekte Schicht für Schicht aus einem formlosen Aufbaumaterial hergestellt werden, indem in jeder Schicht die Querschnitte der Objekte in dieser Schicht durch Verfestigung des Aufbaumaterials erzeugt werden. Mittels derartiger Verfahren lassen sich beliebig gestaltete Objekte auf der Grundlage einer computerbasierten dreidimensionalen Repräsentation eines Objekts, die beispielsweise mittels eines CAD-Entwurfsprogramms erstellt wurde oder aber über eine 3D-Scanvorrichtung erstellt wurde, herstellen. Trotz der vielfältigen Anwendungsmöglichkeiten additiver Herstellverfahren hat es sich gezeigt, dass es bei manchen herzustellenden Objekten das Problem geben kann, dass Objektdetails und -abmessungen nicht mit der erforderlichen Präzision realisiert werden. Ein Beispiel für solch ein Objekt ist ein in DE 10 2007 058 986 B3 beschriebenes Streustrahlenraster für medizinische Röntgeneinrichtungen. Streustrahlenraster sind Strahlungskollimatoren, die vielfach in der medizinischen Röntgendiagnostik eingesetzt werden zur Verbesserung des Kontrastes der Aufnahmen. Fig. 8 zeigt einen typischen Aufbau, wie er bei einer Röntgenaufnahme im medizinischen Bereich vorliegt. Die Strahlung 1010 einer Röntgenquelle 1000 dringt durch ein Körperteil 1020, in welchem die Strahlung teilweise absorbiert wird, und fällt dann auf einen Röntgendetektor 2000, bei dem es sich entweder um einen Film oder einen Bildzellendetektor handelt. Insbesondere erkennt man, dass die Strahlung von der Röntgenquelle 1000 mit geringem Strahldurchmesser emittiert wird und sich die Strahlung zum Detektor 2000 hin aufweitet.

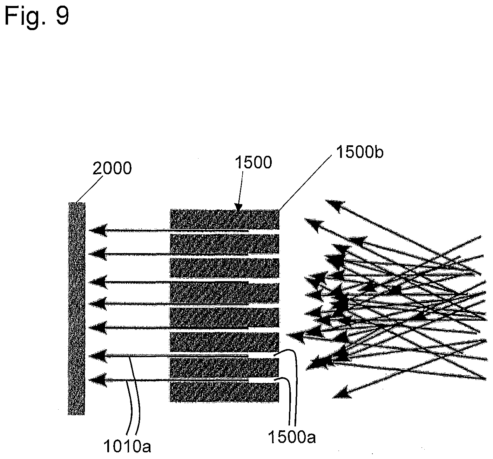

Für eine hohe Bildauflösung ist es von Vorteil, wenn die Röntgenstrahlen möglichst auf geradem Weg das Objekt 1020 durchdringen und auf den Detektor 2000 auftreffen. Die Auflösung wird jedoch deutlich herabgesetzt durch Comptonstreuung, infolge welcher Röntgenstrahlen 1001 im Objekt 1020 ohne vollständige Absorption aus ihrer Richtung abgelenkt werden. Um dennoch ein Bild mit hoher Auflösung zu erhalten, wird zwischen Objekt 1020 und Detektor 2000 ein Streustrahlenraster 1500 platziert, welches durch Comptonstreuung im Objekt abgelenkte Photonen möglichst vollständig absorbieren soll. Die Funktionsweise solch eines Streustrahlenrasters 1500 ist sehr schematisch in Fig. 9 gezeigt. Man erkennt, dass nur Strahlen 1010a, die möglichst parallel zu den Durchlassschlitzen bzw. Kanälen 1500a des Streustrahlenrasters 1500 verlaufen, nicht in den Wänden 1500b des Streustrahlenrasters 1500 absorbiert werden und auf den Detektor 2000 gelangen.

Gerade bei der Verwendung von Bildzellendetektoren ist die erzielbare Auflösung umso größer, je kleiner die Bildzellen sind. Dies zieht aber nach sich, dass auch ein eingesetztes Streustrahlenraster ein möglichst kleines Rastermaß aufweisen sollte. Ferner steigt die Bildauflösung mit dem sogenannten Schachtverhältnis, bei dem es sich um das Verhältnis von der Breite eines Durchlassschlitzes zu seiner Abmessung in Durchdringungsrichtung handelt. Die Abmessung in Durchdringungsrichtung wird auch oft als "Höhe" bezeichnet. Ferner sollten natürlich Streustrahlen nicht nur in einer Dimension reduziert werden, sondern möglichst in zwei aufeinander senkrecht stehenden Dimensionen. Berücksichtigt man ferner noch, dass die Röntgenstrahlen nicht zueinander parallel sind, wenn sie auf den Detektor auftreffen, so erkennt man, dass der Aufbau eines Streustrahlenrasters sehr kompliziert sein kann. Die Herstellung eines solchermaßen komplizierten Streustrahlenrasters ist als Folge sehr aufwendig, insbesondere, wenn wie bei DE 10 2007 058 986 B3 die Lamellen oder Wände des Streustrahlenrasters sehr dünn und mit präzisen Abständen zueinander vorliegen sollen.

Die Aufgabe der vorliegenden Erfindung ist die Bereitstellung eines verbesserten bzw. alternativen Verfahrens und einer zugehörigen Vorrichtung, mittels derer Objekte - insbesondere bevorzugt mit erhöhter Präzision und Detailauflösung - mittels einer generativen Schichtbauvorrichtung hergestellt werden können.

Die Aufgabe wird gelöst durch ein Herstellverfahren nach Anspruch 1 und ein Computerprogramm nach Anspruch 15. Weiterbildungen der Erfindung sind in den Unteransprüchen angegeben.

Ein erfindungsgemäßes Herstellverfahren zur Herstellung mindestens eines dreidimensionalen Objekts mittels einer additiven Herstellvorrichtung, wobei in der additiven Herstellvorrichtung das mindestens eine Objekt Schicht für Schicht hergestellt wird durch Verfestigung eines Aufbaumaterials an den dem Querschnitt eines Objekts in einer Schicht entsprechenden Stellen, wobei die Herstellvorrichtung für den Herstellungsvorgang durch einen Steuerbefehlssatz angesteuert wird, umfasst die Schritte:
- Bereitstellen eines Parametersatzes, der aus einer Anzahl an Parametern besteht, und einer Konstruktionsvorschrift, die geeignet ist, zumindest einen Abschnitt des Objekts mittels des Parametersatzes geometrisch als eine Anzahl von linienförmigen oder flächigen Elementen im Raum zu beschreiben, wobei der geometrisch beschriebene Abschnitt des Objekts zumindest innerhalb einer Schicht allein aus linienförmigen Elementen zusammengesetzt ist,
- Erzeugen eines computerbasierten Schichtenmodells des Abschnitts des Objekts, indem für jede Schicht die Lage und Gestalt eines Querschnitts des Abschnitts des Objekts in dieser Schicht ermittelt wird,
- Erzeugen eines Steuerbefehlssatzes für eine additive Herstellvorrichtung, durch den die Herstellung des Abschnitts des Objekts auf der Grundlage des Schichtenmodells implementiert wird,
- Verfestigen des Aufbaumaterials indem dem Aufbaumaterial mittels eines elektromagnetischen Strahlbündels oder Teilchenstrahlbündels Wärmeenergie zugeführt wird, wobei das oder die linienförmigen Elemente in Richtung des Linienverlaufs mit dem elektromagnetischen Strahlbündel oder Teilchenstrahlbündel ein- oder mehrmals abgetastet werden.

Additive Herstellvorrichtungen und -verfahren, auf die sich die vorliegende Erfindung bezieht, sind unter anderem solche, bei denen Energie als elektromagnetische Strahlung oder Teilchenstrahlung selektiv einer Schicht eines formlosen Aufbaumaterials zugeführt wird, um dieses zu verfestigen. Hierbei wird die Energie mittels eines Lasers oder einer Elektronenstrahlquelle zugeführt, denkbar wäre aber auch eine UV-Lichtquelle, wie sie insbesondere in der Stereolithographie verwendet wird. Bei dem Strahlbündel handelt es sich entsprechend bevorzugt um einen Laserstrahl, Elektronenstrahl oder UV-Licht-Strahl. Da der Auftreffbereich der Strahlung nicht Punktgestalt haben muss, sondern flächig sein kann, wird in der vorliegenden Anmeldung oft der Begriff Strahlbündel verwendet.

Zunächst sei erwähnt, dass der geometrisch beschriebene zumindest eine Abschnitt des Objekts auch das gesamte Objekt umfassen kann. Es sei an dieser Stelle auch bemerkt, dass mittels einer additiven Herstellvorrichtung nicht nur ein Objekt, sondern auch mehrere Objekte gleichzeitig hergestellt werden können. Wenn in der vorliegenden Anmeldung von der Herstellung eines Objekts die Rede ist, dann versteht es sich, dass die jeweilige Beschreibung in gleicher Weise auch auf additive Herstellverfahren und -vorrichtungen anwendbar ist, bei denen mehrere Objekte gleichzeitig hergestellt werden.

Als Steuerdatensatz (oft auch als Steuerbefehlssatz bezeichnet) wird hier eine Abfolge von Anweisungen angesehen, Schichten des Aufbaumaterials nacheinander aufzutragen und in den Bereichen der jeweiligen Schichten, die dem Querschnitt des/der herzustellenden Objekte(s) entsprechen, das Aufbaumaterial zu verfestigen.

Der Steuerdatensatz legt für jede Aufbaumaterialschicht während der Herstellung insbesondere die Dicke des Schichtauftrags und die Stellen, an denen durch Strahlungszufuhr eine Verfestigung des Aufbaumaterials bewirkt werden soll, fest. Damit enthält ein Steuerdatensatz implizit auch Informationen bezüglich der Lage und Orientierung der Objekte in der additiven Herstellvorrichtung. Auch der Durchmesser eines (Energie-)strahl(bündel)s beim Auftreffen auf das Aufbaumaterial kann spezifiziert sein. In der Regel enthält der Steuerdatensatz alle zur Steuerung der Energieeintragsvorrichtung erforderlichen Daten, wodurch z.B. die Energiedichte der Strahlung und/oder die Verfahrgeschwindigkeit des Strahlbündels über das Aufbaumaterial und/oder ein Bestrahlungsmuster festgelegt werden.

Der Steuerdatensatz kann somit als Gesamtheit aller für die Steuerung des Herstellungsvorgangs in einer additiven Herstellvorrichtung vorgegebenen Steuerdaten angesehen werden. Die auf eine einzelne Schicht bezogenen Steuerdaten werden dabei im Folgenden auch als Schichtdatensatz bezeichnet. In der vorliegenden Anmeldung wird insbesondere angenommen, dass ein Schichtdatensatz ein Datenmodell von während des Herstellungsverfahrens zu verfestigenden Stellen eines Objektquerschnitts in der zugehörigen Schicht enthält. In dem Schichtdatensatz werden einem Objektquerschnitt entsprechende Stellen, die in der zugehörigen Aufbaumaterialschicht zu verfestigen sind, spezifiziert. Darüber hinaus können noch weitere Informationen hinsichtlich der Herstellung des Objektquerschnitts enthalten sein, z. B. die Schichtdicke oder Bestrahlungsparameterwerte wie beispielsweise der Durchmesser oder die Verfahrgeschwindigkeit eines auf das Aufbaumaterial auftreffenden Strahlbündels, etc. Es sei betont, dass es auch möglich ist, dass ein Schichtdatensatz sich nicht auf einen kompletten Objektquerschnitt bezieht, sondern nur auf einen Abschnitt desselben.

Durch die Konstruktionsvorschrift kann eine Randbedingung beispielsweise in Form einer Gleichung vorgegeben werden, mittels derer die Gestalt und/oder Größe und/oder Orientierung und/oder Lage des Objektabschnitts, insbesondere auch des gesamten Objekts, im Raum ermittelt werden kann. Der Objektabschnitt wird dadurch als Menge von Punkten beschrieben, deren Lage im Raum mittels der Konstruktionsvorschrift ermittelt werden kann. Beispiele für solche Konstruktionsvorschriften sind Koordinaten- oder Parametergleichungen, wie sie aus der analytischen Geometrie zur Beschreibung von Kurven oder Flächen im Raum bekannt sind. Es sei angemerkt, dass der Begriff "Kurve" bzw. "Linie" in der vorliegenden Anmeldung im mathematischen Sinne verwendet wird, also nicht eine Linienkrümmung impliziert, sondern auch gerade Linien umfasst. Ebenso muss eine Fläche im Sinne der vorliegenden Anmeldung nicht zwangsläufig eben sein, sondern kann auch eine Krümmung im Raum aufweisen.

Ein Parametersatz weist eine Anzahl von Parametern auf, deren Zahlenwerte als Konstanten in die Konstruktionsvorschrift eingehen. Der Begriff "Anzahl" wird dabei in dieser Anmeldung stets im Sinne von "ein oder mehrere" verstanden. Besteht beispielsweise die Konstruktionsvorschrift aus den Gleichungen x=cos(t) und y=sin(t), so wäre t der Parameter in diesem System von Parametergleichungen.

Ein Beispiel für eine erfindungsgemäße Beschreibung eines Objekt(abschnitt)s durch eine Konstruktionsvorschrift und einen Parametersatz wäre u.a. auch die Vorgabe einer Abmessung in einer Raumrichtung durch einen Parameter. Wenn durch die Konstruktionsvorschrift z.B. eine vorgegebene Grundfläche (z.B. ein Kreis) mit diesem Parameter kombiniert wird, kann dadurch z.B. ein zylinderförmiger Objektabschnitt beschrieben werden, dessen Höhe durch den Parameter vorgegeben wird. Durch Ändern der Werte dieses Parameters kann in einfacher Weise die Abmessung des herzustellenden Objektabschnitts geändert werden.

Mit Bereitstellung eines Parametersatzes und einer Konstruktionsvorschrift ist gemeint, dass auf einen Parametersatz und eine Konstruktionsvorschrift zur Beschreibung des Objektabschnitts zugegriffen wird, die in einem digitalen Speicher in oder außerhalb der additiven Herstellvorrichtung oder auf einem portablen Speichermedium hinterlegt sind oder von einem Nutzer der additiven Herstellvorrichtung explizit an einem Eingabeterminal spezifiziert werden.

Erfindungsgemäß muss bei der Erzeugung des Schichtenmodells, das eine Anzahl von Schichten aufweist, nicht auf eine Beschreibung des herzustellenden Objektabschnitts bzw. Objekts in Form eines CAD-Modells, insbesondere Volumen-, Flächen-oder Kantenmodells, zurückgegriffen werden. Dies führt dazu, dass Objekte mit präziseren Detailabmessungen hergestellt werden können:
Jede Beschreibung eines Objekts mittels eines CAD-Modells beschreibt im Grunde die Gestalt des Objekts lediglich näherungsweise. Beispielsweise wird bei der Beschreibung im STL-Format die Oberfläche des Objekts durch unterschiedlich große ebene Dreiecke angenähert. Gerade bei gekrümmten Oberflächen treten dabei aber Abweichungen zwischen den Lageorten der Eckpunkte eines Dreiecks und der zu beschreibenden Oberfläche auf, die zu einer unpräzisen Beschreibung der Objektgestalt führen. Wird das herzustellende Objekt auf der Grundlage solch eines im Grunde unpräzisen Modells hergestellt, so stößt zwangsläufig auch die Detailauflösung bzw. Präzision der Herstellung an ihre Grenzen. Zwar kann durch eine Verkleinerung der Dreiecke die Präzision des Modells erhöht werden, jedoch hat dies auch eine erhebliche Zunahme des vom Modell beanspruchten Datenvolumens zur Folge, was wiederum zu langen Zeiten für die Generierung von für die Objektherstellung benötigten Steuer- bzw. Schichtdatensätzen führt.

Indem eine Konstruktionsvorschrift verwendet wird zur Vorgabe der in einer Schicht zu verfestigenden Stellen eines Objektquerschnitts, wird das Herstellverfahren von den Einschränkungen befreit, die durch eine limitierte Ortsauflösung bei der Beschreibung des herzustellenden Objekts mittels eines CAD-Volumenmodells entstehen. Durch die Verwendung der Konstruktionsvorschrift kann die Größe, Gestalt, Orientierung oder Lage eines Objekt(abschnitt)s im Raum exakt angegeben werden ohne durch eine "Granularität" des Modells beeinträchtigt zu sein. Damit hängt die Auflösung von Objektdetails bzw. die Präzision, mit der Abstände von Objektdetails zueinander realisiert werden können, nicht mehr von Unzulänglichkeiten des Modells ab. Insbesondere sei hervorgehoben, dass für die Herstellung von Objekten gemäß der Erfindung nicht zwangsweise ein CAD-Modell des Objekts vorliegen muss. Es reicht, wenn bei einer vorgegebenen Problemstellung die geometrischen Randbedingungen für die Gestalt und die Abmessungen des Objekts in Form von Parametern vorgegeben werden. Dies erweitert das Spektrum von mittels eines additiven Herstellverfahrens herstellbaren Objekten beträchtlich und führt zudem zu einer nicht unbeträchtlichen Vereinfachung.

Insbesondere können mittels der Konstruktionsvorschrift und des Parametersatzes Objekt(abschnitt)e in Form von "Fadenmodellen" beschrieben werden, indem nicht ein massives Objekt spezifiziert wird, sondern das Objekt (insbesondere dessen Oberfläche) durch eine Anzahl von linienförmigen Elementen definiert wird. Es sei bemerkt, dass solch ein Vorgehen nicht zu Einbußen in der Detailgenauigkeit führt, da die linienförmigen Elemente mittels einer Konstruktionsvorschrift exakt beschrieben werden. Indem sich die Erfindung davon abwendet, die Herstellung eines massiven Objekts zu spezifizieren, kann die Größe des Steuerdatensatzes reduziert werden, was die Handhabbarkeit der Daten gerade bei komplizierteren bzw. größeren Objekten erleichtert. Desweiteren ist es bei dem gewählten Vorgehen möglich, auf einfache Art und Weise Änderungen der Geometrie vorzunehmen, indem lediglich die Werte einer Anzahl von Parametern abgeändert werden. Eine vollständige Neuberechnung eines kompletten Datenmodells eines Objekt(abschnitt)s erübrigt sich dadurch. Durch eine Beschreibung eines Objektabschnitts allein mittels linienförmiger oder flächiger Elemente ist es (im Gegensatz zu einer Beschreibung mittels Volumenelelementen) bei einer additiven Herstellung des Objektabschnitts möglich, die zu verfestigenden Stellen in einfacher Weise mittels der Konstruktionsvorschrift vorzugeben. Bei dem erfindungsgemäßen Vorgehen ist die Herstellung von massiven Objektabschnitten dennoch über die Vorgabe des Abstands der linienförmigen oder flächigen Elemente zueinander und/oder des Durchmessers des Verfestigungsbereichs (z.B. des Einwirkbereichs der verwendeten Strahlung auf dem Aufbaumaterial) möglich.

Die Lage und gegebenenfalls auch die Gestalt eines linienförmigen Elements im Raum können dabei durch die Konstruktionsvorschrift vorgegeben werden und die Breite des linienförmigen Elements durch einen oder mehrere Parameter vorgegeben sein. Der Wert des entsprechenden Parameters könnte z.B. dem minimal einstellbaren Durchmesser des Auftreffbereichs eines Strahlbündels in der additiven Herstellvorrichtung oder einem Vielfachen davon entsprechen. Es ist auch möglich, die Breite des linienförmigen Elements nicht durch einen Parameter zu spezifizieren. Für diesen Fall könnte die Konvention vereinbart sein, dass das linienförmige Element beim Herstellvorgang in der additiven Herstellvorrichtung mit dem minimal einstellbaren Durchmesser des Auftreffbereichs eines Strahlbündels abgetastet wird.

Insbesondere kann die Konstruktionsvorschrift die geometrische Anordnung einer Mehrzahl von ähnlichen, bevorzugt im Wesentlichen identischen, linienförmigen oder flächigen Elementen im Raum beschreiben. Dabei soll der Begriff "ähnlich" in der vorliegenden Anmeldung eine im Wesentlichen identische geometrische Gestalt (beispielsweise eine Rechteckgestalt) zum Ausdruck bringen. Aus einer im Wesentlichen identischen geometrischen Gestalt resultieren nach diesem Verständnis nicht zwangsläufig identische Abmessungen.

Wenn Schichtdaten für einen Steuerbefehlssatz auf der Grundlage einer Konstruktionsvorschrift erzeugt werden, dann eignet sich solch ein Vorgehen gerade für Objekte bzw. Objektabschnitte mit sich im Raum wiederholenden Strukturelementen. Dabei muss es sich nicht zwangsläufig nur um ein einziges Strukturelement (z.B. ein linienförmiges oder flächiges Element) handeln, dessen Mehrfachanordnung im Raum spezifiziert wird. Denkbar ist auch, dass durch die Konstruktionsvorschrift die Mehrfachanordnung einer Mehrzahl von voneinander verschiedenen Strukturelementen im Raum spezifiziert wird, beispielsweise die alternierende Anordnung von zwei unterschiedlichen Strukturelementen.

Bevorzugt spezifiziert die Konstruktionsvorschrift eine ein- oder mehrmalige Verschiebung eines linienförmigen oder flächigen Elements in einer ersten Raumrichtung und/oder in einer, bevorzugt auf der ersten Raumrichtung senkrecht stehenden, zweiten Raumrichtung. Insbesondere kann die Konstruktionsvorschrift eine ein- oder mehrmalige Verschiebung eines linienförmigen oder flächigen Elementes in einer ersten Raumrichtung und/oder in einer, bevorzugt auf der ersten Raumrichtung senkrecht stehenden, zweiten Raumrichtung spezifizieren. Verschiebung bedeutet hier, dass das linienförmige oder flächige Element nicht lediglich verschoben wird, sondern an dem durch die Verschiebung resultierenden Ort eine Kopie des linienförmigen oder flächigen Elementes in ähnlicher, bevorzugt identischer, Gestalt spezifiziert wird.

Mit solch einer Konstruktionsvorschrift lassen sich beispielweise ein- oder zweidimensionale Gitter im Raum spezifizieren. Ein Gitterabstand in der ersten Raumrichtung könnte beispielsweise durch den Wert eines ersten Parameters vorgegeben sein und ein optionaler Gitterabstand in der zweiten Raumrichtung könnte beispielsweise durch den Wert eines zweiten Parameters vorgegeben sein. Insbesondere muss bei einer mehrmaligen Verschiebung der Abstand zwischen zwei benachbarten linienförmigen oder flächigen Elementen nicht konstant sein, sondern kann gemäß einer in dem Parametersatz enthaltenen Menge von ersten Parameterwerten bzw. zweiten Parameterwerten variieren.

Weiter bevorzugt spezifiziert die Konstruktionsvorschrift eine ein- oder mehrmalige Drehung eines linienförmigen oder flächigen Elements.

Drehung bedeutet hier, dass das linienförmige oder flächige Element um einen oder mehrere als Parameter vorgegebene Winkel um eine vorgegebene Achse im Raum gedreht wird. Dabei wird an dem durch die Drehung resultierenden Ort jeweils eine Kopie des linienförmigen oder flächigen Elementes in ähnlicher, bevorzugt identischer, Gestalt spezifiziert. Beispielsweise könnte durch die Konstruktionsvorschrift eine Regelfläche beschrieben werden, z.B. ein Rotationshyperboloid, welches mittels Rotation einer Strecke (d.h. eines linienförmigen Elements) um eine zu ihr windschiefe Achse beschrieben wird.

Weiter bevorzugt unterscheiden sich zwei linienförmige oder flächige Elemente in mindestens einer Abmessung um einen als Parameter vorgegebenen Skalierungsfaktor voneinander.

Die Parameterbeschreibung von Objekten ist insbesondere dann sehr einfach, wenn es in den Objekten zueinander identische Strukturelemente bzw. zueinander ähnliche Strukturelemente gibt. In solch einem Fall muss lediglich das Aussehen solch eines Strukturelements exakt beschrieben werden und die Lagen der mehrfach vorhandenen Strukturelemente werden dann durch eine überschaubare Anzahl von Skalierungsparametern und Orientierungsparametern vorgegeben. Wiederum erkennt man die deutliche Vereinfachung gegenüber dem Normalfall, in dem ein STL- bzw. CAD-Format verwendet wird, in dem jedes einzelne Strukturelement separat angenähert werden muss.

Mit solch einem Vorgehen kann auf einfache Weise beispielsweise ein Kegel oder Kegelstumpf beschrieben werden, welcher durch die Konstruktionsvorschrift anhand der Höhe und des Skalierungsfaktors, die beide als Parameter vorgegeben sind, beschrieben wird, z.B. indem eine kreisförmige Grundfläche vorgegeben ist und der Skalierungsfaktor den Größenunterschied zwischen zwei aneinandergrenzenden Kreisen festlegt.

Ein linienförmiges Element ist, wie bereits weiter oben erwähnt, ein Bereich, welcher in einer Richtung senkrecht zur "Linie" einen Durchmesser aufweist, der in der Größenordnung des Durchmessers des zur Verfestigung des Aufbaumaterials eingesetzten Strahlbündels beim Auftreffen auf das Aufbaumaterial liegt. Gerade wenn die Dimensionen von Objektabschnitten und/oder Abstände von Details in diesen Objektabschnitten in diese Größenordnung kommen, kann ein zur Objektbeschreibung verwendetes Volumenmodell, beispielsweise ein Modell, bei dem wie beim STL- bzw. beim CAD-Format (hierunter wird im Folgenden u.a. auch ein Volumen-CAD-Format verstanden) die Oberfläche des Bauteils mit unterschiedlich großen ebenen Dreiecken angenähert wird, oftmals nicht mehr die notwendige Detailauflösung liefern, ohne dass die Größe der Datensätze exorbitant zunimmt und Verarbeitungszeiten bei Umwandlungen der Daten exorbitant anwachsen.

Weiter bevorzugt spezifiziert zumindest ein Parameter eine, bevorzugt geometrische, Randbedingung bei der Verwendung des fertig gestellten Objekts.

Parameter können sich auch nur indirekt auf die Geometrie des herzustellenden Objekt(abschnitt)s beziehen, indem Parameter Randbedingungen am Einsatzort des herzustellenden Objekts spezifizieren, welche eine Festlegung einer Gestalt, Abmessung, Lage oder Orientierung des Objekt(abschnitt)s unmittelbar zur Folge haben. Die Ermittlung der resultierenden geometrischen Parameter des Objekt(abschnitt)s wie Gestalt, Abmessung, Lage oder Orientierung kann bei bekannten Problemstellungen durch das erfindungsgemäße Verfahren selbst erfolgen. Ein Beispiel für einen Parameter, der aus dem geplanten Einsatz des herzustellenden Objekts resultiert und die Geometrie des herzustellenden Objekts festlegt, wäre bei einem Streustrahlenraster der Abstand der Strahlungsquelle von der Detektoranordnung.

Weiter bevorzugt ist der Abschnitt des Objekts ein Kollimator mit einer Mehrzahl von zur Blockierung von Strahlung verwendeten Rasterelementen, bevorzugt ein Kollimator für den Einsatz in einer Strahlungseinrichtung zwischen einer Strahlungsquelle und einer Detektoranordnung, und die Konstruktionsvorschrift für die geometrische Beschreibung des Kollimators verwendet die folgenden Parameter: die Anzahl der Rasterelemente und/oder den Abstand derselben zueinander und/oder den Abstand der Strahlungsquelle von der Detektoranordnung.

Mit der erfindungsgemäßen Vorgehensweise können beliebige Objekte, deren Geometrie sich mit einer Anzahl Parameter und einer Konstruktionsvorschrift geometrisch beschreiben lässt, hergestellt werden. Infolge der hohen Anforderungen an die Detailauflösung und die Präzision bietet es sich insbesondere an, einen Kollimator, der zwischen einer Strahlungsquelle und einer Detektoranordnung eingesetzt wird, auf der Grundlage des erfindungsgemäßen Vorgehens zu realisieren.

Weiter bevorzugt handelt es sich bei dem Kollimator um ein Streustrahlenraster für den Einsatz in einer Röntgeneinrichtung und die Rasterelemente sind zueinander parallele ebene Wände oder Zylinderflächenabschnitte.

Ein Einsatz der Erfindung im Zusammenhang mit einer Röntgeneinrichtung ist gerade deshalb von Vorteil, weil sich Röntgenstrahlen in der Regel besser abblocken lassen als beispielsweise Gammastrahlen. Ferner hat man gerade für Röntgeneinrichtungen bereits Detailauflösungen erreicht, die den Einsatz von Streustrahlenrastern mit sehr geringem Rasterabstand notwendig machen. Handelt es sich bei der Strahlungsquelle um eine medizinische Röntgenquelle, so wird der Kollimator normalerweise als Streustrahlenraster bezeichnet. Denkbar ist aber auch ein Einsatz in nicht-medizinischen Anwendungen oder in Anwendungen, bei denen, insbesondere für Bildgebungsverfahren, andere Strahlen, wie z.B. Gammastrahlen oder Teilchenstrahlen, eingesetzt werden, beispielsweise in der Nuklearmedizin.

Weiter bevorzugt handelt es sich bei dem Kollimator um ein Streustrahlenraster für den Einsatz in einer medizinischen Röntgeneinrichtung und die Rasterelemente sind eine Mehrzahl von Stäben oder ebenen Wänden oder Zylinderflächenabschnitten, welche gemäß der Konstruktionsvorschrift analog zu den Strahlen des von der Röntgenquelle in Richtung der Detektoranordnung emittierten Strahlenkegels ausgerichtet sind.

Eine analoge Ausrichtung von Rasterelementen zu Strahlen kann insbesondere auch eine parallele Ausrichtung sein. Insbesondere wenn es sich um ein fokussierendes Streustrahlenrasters handelt, ist dessen Herstellung auf konventionellem Wege sehr schwierig, da eine exakte Ausrichtung der absorbierenden Wände des Streustrahlenrasters in zwei Dimensionen notwendig ist. Bei der erfindungsgemäßen Herstellung solch eines Streustrahlenrasters wird die Herstellung für ein fokussierendes Streustrahlenraster nicht komplizierter, was zum einen mit der additiven Herstellung zusammenhängt, zum anderen aber auch mit der präzisen Beschreibung des Streustrahlenrasters durch eine Konstruktionsvorschrift.

Eine beispielhafte Vorrichtung zur Bereitstellung eines Steuerbefehlssatzes für eine additive Herstellvorrichtung zur Herstellung mindestens eines dreidimensionalen Objekts, wobei in der additiven Herstellvorrichtung das mindestens eine Objekt Schicht für Schicht hergestellt wird durch Verfestigung eines Aufbaumaterials an den dem Querschnitt des Objekts in einer Schicht entsprechenden Stellen, umfasst mindestens:
- eine Bereitstellungseinheit, die im Betrieb einen Parametersatz, der aus einer Anzahl an Parametern besteht, und eine Konstruktionsvorschrift, die geeignet ist, zumindest einen Abschnitt des Objekts mittels des Parametersatzes geometrisch als eine Anzahl, bevorzugt eine Mehrzahl, von linienförmigen oder flächigen Elementen im Raum, die im Falle einer Mehrzahl besonders bevorzugt ähnlich, insbesondere identisch sind, zu beschreiben, bereitstellt,
- einer Schichtenmodell-Erzeugungseinheit, die im Betrieb ein computerbasiertes Schichtenmodell des Abschnitts des Objekts erzeugt, indem für jede Schicht die Lage und Gestalt eines Querschnitts des Abschnitts des Objekts in dieser Schicht ermittelt wird, und
- eine Steuerbefehlssatz-Erzeugungseinheit, die im Betrieb einen Steuerbefehlssatz für eine additive Herstellvorrichtung erzeugt, durch den die Herstellung des Abschnitts des Objekts auf der Grundlage des Schichtenmodells implementiert wird.

Bei der Bereitstellungseinheit kann es sich um eine Eingangsschnittstelle handeln, welche Daten von einem mobilen Datenträger einlesen kann oder Daten über ein Netzwerk entgegennehmen kann oder aber Daten direkt von einer Eingabeschnittstelle für einen Nutzer entgegennehmen kann. Da die Vorrichtung zur Bereitstellung von Steuerbefehlen insbesondere nicht nur als separate Einheit implementiert werden kann, sondern auch Bestandteil eines umfassenderen EDV-Systems (z.B. eines CAD-Entwurfssystems) oder einer additiven Herstellvorrichtung sein kann, kann es sich bei der Bereitstellungseinheit auch lediglich um eine Softwareschnittstelle handeln, die mit den anderen Systemkomponenten kommuniziert. Das Netzwerk kann ein LAN sein oder aber auch das Internet sein. Das soeben Gesagte gilt in gleicher Weise für die Steuerbefehlssatz-Erzeugungseinheit. Insbesondere können die Steuerbefehle von dieser über ein Netzwerk einer von der Vorrichtung zur Bereitstellung von Steuerbefehlen räumlich entfernten additiven Herstellvorrichtung übermittelt werden. Insbesondere wenn die Vorrichtung zur Bereitstellung von Steuerbefehlen in eine additive Herstellvorrichtung integriert ist, ist auch eine Datenübertragung über ein Bussystem oder einen gemeinsamen Speicher möglich.

Durch das erfindungsgemäße Herstellverfahren können Objekte mittels einer generativen Schichtbauvorrichtung mit erhöhter Präzision und Detailauflösung gefertigt werden, ohne durch die Auflösung eines ein Objekt beschreibenden STL- bzw. CAD-Dateiformats beschränkt zu sein.

Eine beispielhafte Ansteuervorrichtung einer Verfestigungseinrichtung, insbesondere einer Energieeintragseinrichtung, wie sie in einer additiven Herstellvorrichtung zur Herstellung mindestens eines dreidimensionalen Objekts zum Einsatz kommt, wobei in der additiven Herstellvorrichtung das mindestens eine Objekt Schicht für Schicht hergestellt wird durch Verfestigung eines Aufbaumaterials an den dem Querschnitt des Objekts in einer Schicht entsprechenden Stellen, weist eine Parameter-Entgegennahmeeinheit auf, die geeignet ist, einen Parametersatz, der aus einer Anzahl an Parametern besteht, entgegen zu nehmen. Weiterhin weist die beispielhafte Ansteuervorrichtung eine Ansteuereinheit auf, die geeignet ist, die Verfestigungseinheit so anzusteuern, dass diese die einem Objekt entsprechenden Stellen in einer Aufbaumaterialschicht verfestigt. Dabei werden von der Ansteuervorrichtung zumindest einem Abschnitt des Objekts entsprechende Stellen anhand einer Konstruktionsvorschrift, die geeignet ist, zumindest einen Abschnitt des Objekts mittels des Parametersatzes geometrisch als eine Anzahl von (insbesondere ähnlichen, bevorzugt identischen) linienförmigen oder flächigen Elementen im Raum zu beschreiben, ermittelt.

Die erwähnte beispielhafte Ansteuervorrichtung kann also insbesondere alleine basierend auf einem vorgegebenen Parametersatz die additive Herstellung eines Objekt(abschnitt)s bewirken, ohne dass auf ein explizites Datenmodell zurückgegriffen werden muss, welches den Objektabschnitt mittels geometrischer Primitive (Dreiecke, Punkte) in allen Details charakterisiert. Insbesondere können auch alle zu verfestigenden Stellen des herzustellenden Objekts auf diese Weise verfestigt werden. Die Ansteuervorrichtung kann insbesondere auch in eine additive Herstellvorrichtung integriert sein, die die anzusteuernde Verfestigungseinrichtung aufweist. Natürlich kann die additive Herstellvorrichtung auch eine Mehrzahl von Verfestigungseinrichtungen aufweisen, die von der Ansteuervorrichtung angesteuert werden.

Bevorzugt kann in dem beispielhaften Verfahren zur Bereitstellung des Steuerbefehlssatzes das Schichtenmodell dynamisch erzeugt werden, also für mindestens eine Schicht die Lage und Gestalt eines Querschnitts des Abschnitts des Objekts in dieser Schicht erst nach Beginn des Herstellverfahrens ermittelt werden.

Bei der resultierenden Variante des Herstellverfahrens muss nicht ein kompletter Steuerbefehlssatz vor Beginn des Herstellungsverfahrens erstellt werden. Das dynamische Generieren der für eine Schicht jeweils notwendigen Informationen ist beim erfindungsgemäßen Vorgehen deshalb sehr einfach, weil die zu verarbeitenden Datenmengen infolge der Beschreibung des Objekts bzw. Objektquerschnitts durch eine Konstruktionsvorschrift und einen Parametersatz sehr klein sind.

Auch wenn für die Herstellung eines hochpräzisen Objekts, beispielsweise eines Streustrahlenrasters, ein 3D-Druckverfahren eingesetzt werden kann, so bietet es sich an, gerade wenn das Raster aus einem Material gefertigt werden soll, das sehr gut Röntgenstrahlen absorbiert, hierfür ein Sinter- oder Schmelzverfahren unter Verwendung von elektromagnetischer Strahlung oder Teilchenstrahlung zu verwenden. Als Materialien kommen dabei insbesondere Elemente mit hoher Kernladungszahl Z, beispielsweise Molybdän- oder Wolframpulver, etc. oder Mischungen derselben oder Legierungen in Frage. Beispielsweise könnte als Aufbaumaterial ein Wolfram- oder Titan-haltiges Metallpulver verwendet werden, bevorzugt Ti6Al4V-Pulver. Des Weiteren bieten sich aber auch Blei-, Wismut-, Strontium-, Cadmium- oder Indium-haltige Materialien an, die nicht zwangsläufig als Pulver vorliegen müssen.

Insbesondere sehr feingliedrige Bereiche eines Objektquerschnitts wie linienförmige Elemente lassen sich dann besonders präzise fertigen, wenn das die Energie zuführende Strahlbündel stets nur im Wesentlichen in Richtung des linienförmigen Elements bewegt wird. Der Grund hierfür liegt darin, dass bei einer Bewegung senkrecht zum linienförmigen Verlauf das Strahlbündel nur für einen sehr kurzen Zeitraum aktiv sein darf. Damit wird aber die minimal erzielbare Abmessung eines linienförmigen Elements senkrecht zur Linie durch die Eigenschaften der additiven Herstellvorrichtung stark begrenzt und hängt beispielsweise davon ab, wie stark die Beschleunigung und Abbremsung beim Bewegen des Auftreffbereichs des Strahlbündels über das Aufbaumaterial sein können.

Noch weiter bevorzugt wird bei dem Herstellverfahren die Breite eines linienförmigen Elements nach dessen Verfestigung eingestellt durch Einstellen der mittleren Energiedichte pro Flächeneinheit im Auftreffbereich des Strahlbündels und/oder durch Einstellen einer Abmessung des Strahlbündels in Richtung der Breite des linienförmigen Elements und/oder durch Einstellen der Geschwindigkeit, mit der das elektromagnetische Strahlbündel oder Teilchenstrahlbündel das/die linienförmigen Element(e) in Richtung des Linienverlaufs abtastet.

Ein linienförmiges Element, das sowohl geradlinig als auch gekrümmt sein kann und bei dem eine Ausdehnung senkrecht zum Verlauf der Linie in der Größenordnung des Auftreffbereichs des Strahlbündels liegt, kann gerade dann mit möglichst geringer Breite hergestellt werden, wenn es lediglich einmalig mit dem Strahl in Richtung des Verlaufs der Linie überfahren wird, wobei die Breite des linienförmigen Elements im Wesentlichen eingestellt wird über die Einstellung der im Mittel dem Aufbaumaterial pro Flächeneinheit zugeführten Strahlungsenergie und/oder die Breite des Auftreffbereichs der Strahlung auf das Aufbaumaterial, z.B. durch Einstellen der Fokussierung.

Alternativ kann die Breite eines linienförmigen Elements eingestellt werden durch mehrmaliges Abtasten des linienförmigen Elements mit einem Strahlbündel entlang des Linienverlaufs. Bevorzugt wird dabei ein Versatz zwischen den einzelnen Scanlinien (Abtastlinien) eingestellt, aber auch ohne Versatz wird die Breite des verfestigten linienförmigen Elements, also dessen Ausdehnung senkrecht zum Linienverlauf, umso größer sein, je öfter das Strahlbündel die Linie nachfährt. Es sei bemerkt, dass bei einem mehrmaligen Abtasten eines linienförmigen Elements die Energieeintragsparameter wie z. B. eine an der Strahlungsquelle eingestellte Leistung oder ein Fokusdurchmesser (Durchmesser des Strahlungsauftreffbereichs auf dem Aufbaumaterial) von Abtastvorgang zu Abtastvorgang unterschiedlich sein können. Beispielsweise kann es Abtastvorgänge zum Vorheizen des Aufbaumaterials oder zum Verzögern des Abkühlens des Aufbaumaterials geben.

Bei einer bevorzugten Variante des Herstellverfahrens kann eine additive Herstellvorrichtung verwendet werden, in der die Verfestigung des Aufbaumaterials mittels eines auf dieses gerichteten elektromagnetischen Strahlbündels oder Teilchenstrahlbündels bewirkt wird, wobei das auf das Aufbaumaterial auftreffende elektromagnetische Strahlbündel oder Teilchenstrahlbündel einen maximalen Durchmesser von kleiner oder gleich 500 µm, bevorzugt kleiner oder gleich 200 µm, noch bevorzugter kleiner oder gleich 100 µm, weiter bevorzugt kleiner oder gleich 80 µm, noch weiter bevorzugt kleiner oder gleich 50 µm aufweist.

Die mittels eines additiven Schichtbauverfahrens, insbesondere eines selektiven Lasersinter- oder Laserschmelzverfahrens erzielbare Auflösung von geometrischen Details, ist unter anderem abhängig von den Strahlparametern (bzw. Strahlbündelparametern), wie z.B. der Laserleistung, dem Durchmesser des Strahl(bündel)s, der Gestalt des Auftreffbereichs des Strahl(bündel)s auf dem Aufbaumaterial, der Leistungsverteilung innerhalb des Auftreffbereichs, etc. Entsprechend ist die Ausführung eines erfindungsgemäßen Herstellverfahren, das eine Herstellung mit erhöhter Präzision und Detailauflösung erlaubt, gerade in solchen additiven Herstellverfahren und - vorrichtungen sinnvoll, bei denen durch konstruktive Maßnahmen, als Beispiel sei hier noch zusätzlich zu Obigem die Verwendung eines gepulsten Lasers genannt, und entsprechende Betriebsweisen, z.B. die zeitliche und örtliche Reihenfolge der Belichtung der einzelnen Stellen eines Objektquerschnitts, die zeitliche und örtliche Variation der Strahlleistung (z.B. durch Abändern der Pulsfrequenz, der Pulshöhe, des Taktverhältnisses, etc bei einem gepulsten Laser) für eine erhöhte Präzision und Detailauflösung gesorgt wird.

Insbesondere der Durchmesser des Strahlbündels wird hierbei die erzielbare Detailauflösung beeinflussen. Die Erfindung ist daher insbesondere bei solchen Herstellverfahren und -vorrichtungen von Vorteil, bei denen zur Verfestigung des Aufbaumaterials ein Strahlbündel mit kleinem Durchmesser eingesetzt wird. Geht man von einem gaussförmigen Strahlprofil aus, so kann der erwähnte Durchmesser des Strahlbündels, genauer gesagt des Auftreffbereichs desselben auf dem Aufbaumaterial, beispielsweise als Durchmesser jenes Bereichs definiert werden, innerhalb dessen die Strahlleistung oberhalb dem Strahlleistungsmaximum dividiert durch e² liegt, wobei e die Eulersche Zahl ist.

Weiterhin kann bei der bevorzugten Variante des Herstellungsverfahrens als Aufbaumaterial ein polymerhaltiges Pulver verwendet werden und das elektromagnetische Strahlbündel mittels eines Kohlenmonoxidlasers erzeugt werden.

Die von einem Kohlenmonoxidlaser emittierte Strahlung umfasst den Wellenlängenbereich zwischen 4 µm und 8 µm. Sie liegt damit unterhalb der Wellenlänge von 10,6 µm, die hauptsächlich von einem Kohlendioxidlaser emittiert wird, welcher üblicherweise zum Verfestigen von polymerhaltigen Aufbaumaterialien in additiven Fertigungsverfahren eingesetzt wird. Daher lässt sich bei Verwendung eines Kohlenmonoxidlasers eine bessere Detailauflösung erzielen.

Insbesondere kann bei Verwendung eines Kohlenmonoxidlasers zur Modifikation der Strahlungsleistung, insbesondere zum An- und Abschalten, ein elektroakustischer oder elektrooptischer Modulator verwendet werden. Die genannten Modulatoren sind besonders geeignet, schnelle Schaltvorgänge, insbesondere ein schnelles Schalten bzw. Abändern der dem Aufbaumaterial zugeführten Laserstrahlung zu bewirken. Dabei wird bevorzugt die die Laserleistungsmodifikationsvorrichtung in nullter Ordnung durchdringende Laserstrahlung den Stellen in jeder Schicht, die dem Querschnitt des Objekts in dieser Schicht zugeordnet sind, zur Verfestigung des Aufbaumaterials zugeführt. Beim Abschalten der Strahlungszufuhr wird dann im Wesentlichen Energie von der nullten Ordnung in die höheren Ordnungen abgezogen.

Weiterhin kann bei der bevorzugten Variante des Herstellungsverfahrens als Aufbaumaterial ein metallhaltiges und/oder keramikhaltiges Pulver verwendet werden, wobei das elektromagnetische Strahlbündel oder Teilchenstrahlbündel so auf das Aufbaumaterial einwirkt, dass ein Wärmeleitungsschweißprozess stattfindet.

Aus dem Laserschweißen sind zwei grundsätzlich verschiedene Verfahrensmodi bekannt, die auch beim selektiven Laserschmelzen zur Anwendung gelangen können: das Tiefschweißen und das Wärmeleitungsschweißen. Als Wärmeleitungsschweißprozess wird hier ein Vorgang angesehen, bei dem die durch die Strahlung in das Aufbaumaterial eingetragene Strahlungsleistung pro Flächeneinheit zu niedrig ist, um eine Verdampfung des Aufbaumaterials zu bewirken. Die Energie breitet sich dann über Wärmeleitung in das Aufbaumaterial aus, was zu einer geringeren Ausdehnung des durch die Strahlung erzeugten Schmelzbades senkrecht zur Oberfläche führt. Die Untersuchung der Art des Schweißprozesses kann z. B. durch die Beobachtung des Strahlungseinwirkbereichs mittels einer Kamera (optisch, IR, UV), durch die Analyse der vom Strahlungseinwirkbereich emittierten Strahlung oder aber durch Analysen an in Vorversuchen hergestellten Testobjekten ermittelt werden. Als Kriterium für das Vorliegen eines Wärmeleitungsschweißprozesses kann z.B. das weitgehende Ausbleiben von Emissionen, die durch die beim Tiefschweißprozess erzeugte Dampfkapillare bedingt sind, also Spratzer bzw. Jets sowie Metalldampf, verwendet werden. Ein weiteres Kriterium ist das Verhältnis des Durchmessers des Strahlbündels zur Tiefenerstreckung der Schmelzspur, welches beim Wärmeleitungsschweißen oberhalb von 1:1 liegt, im Optimalfall 2:1 oder größer ist, z.B. 3:1 oder größer oder 4:1 oder größer, auf jeden Fall aber unterhalb von 100:1 liegt. Ferner kann auch die Oberflächentemperatur des Aufbaumaterials als Kriterium dienen. Wenn letztere unter dem Verdampfungspunkt einer bzw. aller Komponenten des Aufbaumaterials liegt, dann kann sich nicht das für den Tiefschweißprozess typische "Keyhole" ausbilden.

Bedingt durch die Natur des Wärmeleitungsschweißprozesses bietet dieser insbesondere dann Vorteile, wenn Objekte mit hoher Detailauflösung in der Richtung, in der die Aufbaumaterialschichten aufeinander geschichtet werden ("z-Richtung") hergestellt werden sollen. Gerade dann, wenn z.B. dünne Wände des Objekts hergestellt werden sollen, die während ihrer Herstellung nicht senkrecht auf den Aufbaumaterialschichten (also zur Arbeitsebene) stehen, ist also die Verwendung des Wärmeleitungsschweißmodus bei der Verfestigung des Aufbaumaterials von Vorteil. In solch einem Fall hat nämlich die Dicke der Wand eine Komponente senkrecht zu den Aufbaumaterialschichten. Aufgrund der geringeren Eindringtiefe der Laserstrahlung bzw. geringeren Ausdehnung des Schmelzbades in die Tiefe beim Wärmeleitungsschweißen resultiert dann eine geringere Ausdehnung des mittels der Einwirkung der Strahlung auf das Aufbaumaterial verfestigten Bereichs, wodurch die Komponente der Wanddicke senkrecht zu den Aufbaumaterialschichten geringer ist und kleinere Wanddicken erzielbar sind. Das genannte Vorgehen ist insbesondere dann von Vorteil, wenn zur Herstellung einer Wand der Strahlauftreffbereich über die Aufbaumaterialschicht entlang der Verlaufsrichtung der Wand bewegt wird, also entlang des linienförmigen Elements, das dem dieser Aufbaumaterialschicht zugeordneten Querschnitt der Wand entspricht. Die minimal erzielbare Wanddicke hängt dann von der minimal erzielbaren Ausdehnung des Verfestigungsbereichs ab, also jenes Bereichs, in dem es durch die Einwirkung der Strahlung im Auftreffbereich zu einer Verbindung, insbesondere zu einem Verschmelzen, von Pulverkörnern miteinander kommt. Je kleiner der Winkel zwischen einer herzustellenden Wand und der Arbeitsebene bzw. der Ebene der Aufbaumaterialschicht ist, desto größer ist dann der durch den Wärmeleitungsschweißmodus potentiell erzielbare Vorteil. Der größte Vorteil ergibt sich für zu fertigende Wände bzw. Wandabschnitte, die während ihrer Herstellung durch Verfestigung von Aufbaumaterial parallel zur Arbeitsebene liegen.

Weiterhin kann bei der bevorzugten Variante des Herstellungsverfahrens das auf das Aufbaumaterial auftreffende Strahlbündel oder Teilchenstrahlbündel einen maximalen Durchmesser von kleiner oder gleich 30 µm aufweisen.

Eine hohe Detailauflösung ist insbesondere bei herzustellenden Objekten vonnöten, deren Absolutgröße in zumindest einer Dimension klein ist. Entsprechend ist die Verwendung eines nach einem erfindungsgemäßen Verfahren bereitgestellten Steuerbefehlssatzes gerade zur Herstellung besonders kleiner, dünner und/oder flacher Objekte von Vorteil. Dabei kann die Maximalabmessung des herzustellenden Objekts in zumindest einer Dimension insbesondere unterhalb von 1 mm liegen, woraus ersichtlich ist, dass der Auftreffbereich des Strahlbündels oder Teilchenstrahlbündels auf das Aufbaumaterial bevorzugt einen maximalen Durchmesser von kleiner oder gleich 30 µm aufweisen sollte.

Ein erfindungsgemäßes Computerprogramm umfasst eine Abfolge von Befehlen, welche bei ihrer Ausführung auf einer additiven Herstellvorrichtung ein erfindungsgemä-ßes Ausführen eines Herstellungsverfahrens bewirkt.

Nachfolgend wird die Erfindung unter Zuhilfenahme der Zeichnungen beschrieben. Dabei können Merkmale, die in den Unteransprüchen bzw. in der folgenden bzw. vorhergehenden Beschreibung im Zusammenhang mit einer Anspruchskategorie erwähnt werden, auch zur Weiterbildung der Gegenstände jeder anderen Anspruchskategorie verwendet werden, es sei denn, dies wird explizit ausgeschlossen. Von den Figuren zeigen:
Fig. 1 eine Draufsicht auf die Strahlungseintrittsfläche eines erfindungsgemäß herstellbaren Streustrahlenrasters,
Fig. 2 eine schematische, vergrößerte Detailansicht des Streustrahlenrasters von Figur 1,
Fig. 3 eine schematische, teilweise im Schnitt dargestellte Ansicht einer beispielhaften Vorrichtung zum additiven Herstellen eines dreidimensionalen Objekts,
Fig. 4 eine Veranschaulichung eines fokussierenden Streustrahlenrasters, das gemäß der Erfindung herstellbar ist,
Fig. 5 ein Diagramm zur Veranschaulichung der Orientierung der Kanalwände in einem fokussierten Streustrahlenraster,
Fig. 6 einen vertikalen Schnitt durch Wände eines Streustrahlenrasters senkrecht zur Wand zur Veranschaulichung von Stützstrukturen gemäß einer besonderen Ausführungsform der Erfindung,
Fig. 7 ein Diagramm, welches schematisch den Aufbau eines Ausführungsbeispiels einer erfindungsgemäßen Vorrichtung zur Bereitstellung eines Steuerbefehlssatzes darstellt,
Fig. 8 eine schematische Darstellung des Aufbaus bei der Erstellung von Röntgenaufnahmen eines Gegenstands und
Fig. 9 eine schematische Darstellung der Wirkungsweise eines Streustrahlenrasters.

Die vorliegende Erfindung entstand ursprünglich in Zusammenhang mit der Idee, einen Strahlungskollimator, insbesondere ein Streustrahlenraster, mittels eines additiven Herstellverfahrens auf präzisere und einfachere Weise herzustellen. Daher wird nachfolgend das erfindungsgemäße Vorgehen im Zusammenhang mit der Herstellung eines Streustrahlenrasters durch einen additiven Herstellvorgang beschrieben.

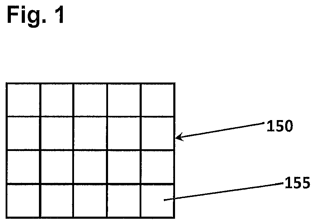

Fig. 1 zeigt eine Draufsicht auf ein erfindungsgemäß herstellbares Streustrahlenraster 150, die die Strahlungseintrittsfläche der zur Untersuchung eines Gegenstands verwendeten Strahlung in das Streustrahlenraster veranschaulicht. Das Streustrahlenraster besteht aus einer Anzahl von Kanälen 155 mit rechteckigem Querschnitt, die zu einem Gitter zusammengefügt sind. Es weist eine Höhe h in der Richtung senkrecht zur Zeichenebene von Fig. 1 auf. Im Anwendungsfall durchdringt die Röntgenstrahlung das Gitter parallel zur Höhe h.

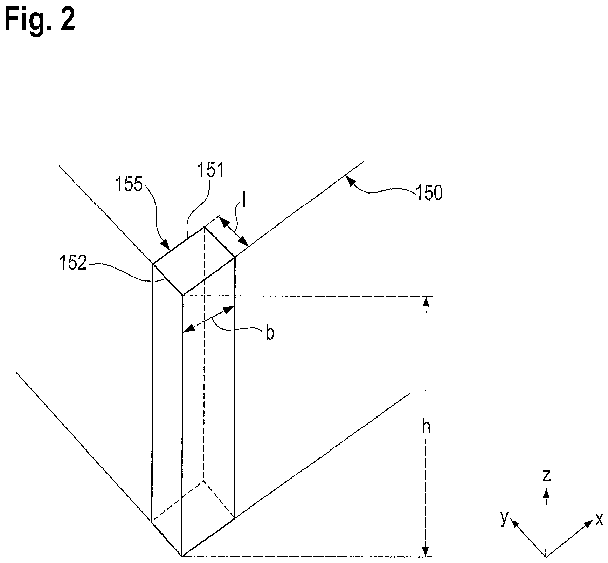

In Figur 2 ist eine einzelne Gitterzelle des Streustrahlenraster 150 vergrößert dargestellt. Dabei ist die eine Seite eines gezeigten Kanals 155 mit b, kennzeichnend die Breite der Kanalöffnung, benannt und die andere Seite mit I, kennzeichnend die Länge der Kanalöffnung, benannt. Die Wandung parallel zur Breite des Kanalquerschnitts ist mit dem Bezugszeichen 151 versehen und die Wandung parallel zur Länge des Kanalquerschnitts ist mit dem Bezugszeichen 152 versehen.

Infolge der Anwendung eines additiven Herstellverfahrens zur Herstellung solch eines Streustrahlenrasters ist es möglich, ein Streustrahlenraster herzustellen, dessen Wandstärken im Bereich von ca. 100 µm liegen mit einer beispielhaften Länge und Breite eines Kanalquerschnitts von 2 bzw. 3 mm und einer beispielhaften Höhe h von 30 mm. Damit möglichst wenig Streustrahlung von dem Streustrahlenraster hindurchgelassen wird und das Streustrahlenraster über die gesamte Fläche, durch die Strahlung hindurchtritt, ein uniformes Verhalten zeigt, ist es notwendig, alle Abmessungen mit hoher Präzision zu fertigen, möglichst mit Dimensionsschwankungen, die kleiner als 10 µm sind.

Damit die hohen Genauigkeitsanforderungen erfüllt werden können, wird hier auf die Erstellung eines STL- bzw. CAD-Datensatzes des herzustellenden Streustrahlenrasters verzichtet. Vielmehr wird das herzustellende Objekt, in diesem Falle das Streustrahlenraster, durch die Angabe von Parametern und einer Konstruktionsvorschrift, wie man anhand der Parameter die geometrische Gestalt des herzustellenden Objekts ermitteln kann, definiert. Für die Herstellung des Streustrahlenrasters sind dabei Angaben zu folgenden Parametern notwendig:
- Die Höhe h des Streustrahlenrasters
- Die Anzahl NX der Wände 152 parallel zur Länge I eines Kanals (unter der Annahme, dass sich die x-Richtung parallel zur Kanalbreite b erstreckt, wie in Figur 2 gezeigt)
- Die Anzahl NY der Wände 151 parallel zur Breite b eines Kanals (in Figur 2 erstreckt sich die y-Richtung parallel zur Länge l eines Kanals)
- Der Rasterabstand in x-Richtung PX
- Der Rasterabstand in y-Richtung PY
- Die Dicke einer Wand parallel zur Kanalbreite b
- Die Dicke einer Wand parallel zur Kanallänge I
- (optional) Die Orientierung des Streustrahlenrasters in der additiven Herstellvorrichtung während seiner Herstellung

Aus dem Obigen ergibt sich, dass die Ausdehnung der Wände 151 parallel zur Breite b eines Kanals im Wesentlichen gleich PX•(NX-1) ist und die Ausdehnung der Wände parallel zur Länge I eines Kanals gleich PY•(NY-1) ist. Man beachte, dass der Rasterabstand PX der Wände 152 aufgrund der Wandstärke unterschiedlich zur Breite b einer Kanalöffnung ist. Gleiches gilt für den Rasterabstand PY und die Länge l einer Kanalöffnung.

Die obigen Angaben sind ausreichend, um die Geometrie des Streustrahlenrasters mit beliebiger Genauigkeit festzulegen, ohne dass die Lage der Triangulationspunkte bei einer STL-Darstellung der Oberfläche die Genauigkeit einschränkt. Abänderungen an der Geometrie können einfach durch Abänderungen der Parameter durchgeführt werden: Beispielsweise kann die Breite b der Kanalöffnungen gleich der Länge l der Kanalöffnungen gesetzt werden. Des Weiteren kann auf einfache Weise die Wanddicke abgeändert werden. Ferner lassen sich auch nicht-rechteckige Kanalquerschnitte oftmals durch einfache geometrische Angaben beschreiben (z.B. bei hexagonalen Kanalquerschnitten oder kreisförmigen Kanalquerschnitten).

Die geometrischen Informationen zur Beschreibung des Streustrahlenrasters lassen sich aus den angegebenen Parametern durch eine einfache Konstruktionsvorschrift gewinnen. Beispielsweise ergeben sich die Koordinaten der einzelnen Wände des Streustrahlenrasters einfach durch mehrmalige Parallelverschiebung einer Wand um den Rasterabstand PX bzw. PY.

Die auf die einzelnen Schichten bezogenen Informationen in einem Steuerbefehlssatz der zur Herstellung des Streustrahlenrasters verwendeten additiven Herstellvorrichtung können bei dem hier beschrieben Vorgehen aus den vorgegebenen Parametern und der Konstruktionsvorschrift auf einfache Weise berechnet werden.

Mit dem gemäß dem obigen Verfahren erzeugten Steuerbefehlssatz kann dann das Streustrahlenraster in üblicher Weise mittels der additiven Herstellvorrichtung, beispielsweise einer Lasersinter- oder -schmelzvorrichtung, hergestellt werden. Als bevorzugte Baumaterialien bieten sich Stoffe mit hoher Kernladungszahl Z an, da diese Strahlung besonders gut absorbieren. Beispielsweise könnte als Aufbaumaterial ein Wolfram- oder Titan-haltiges Metallpulver verwendet werden, bevorzugt Ti6AI4V-Pulver.

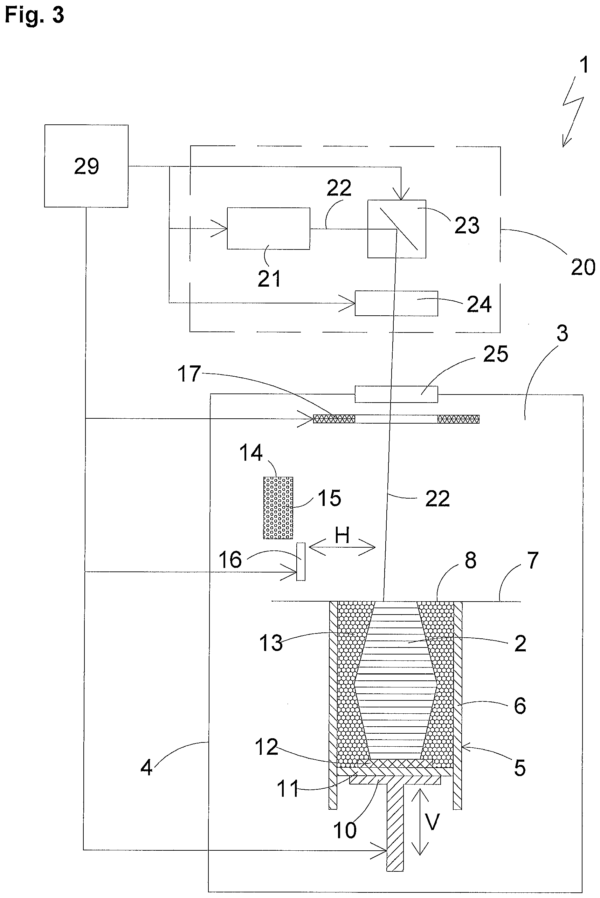

Im Folgenden wird mit Bezug auf Fig. 3 eine Lasersinter- oder -schmelzvorrichtung 1 als Beispiel einer additiven Herstellvorrichtung beschrieben, mittels derer ein dreidimensionales Objekt, wie z.B. ein Streustrahlenraster, gemäß der Erfindung hergestellt werden kann.

Zum Aufbauen eines Objekts 2 enthält diese schichtweise additive Herstellvorrichtung eine Prozesskammer 3 mit einer Kammerwandung 4. In der Prozesskammer 3 ist ein nach oben offener Behälter 5 mit einer Behälterwandung 6 angeordnet. Die vertikale Lage der oberen Öffnung des Behälters 5 definiert eine Arbeitsebene 7, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Um möglichst geringe Schichtdicken beim Auftrag einer Aufbaumaterialschicht, beispielsweise Pulver, realisieren zu können, kann man neben Klingen oder Walzen zum Pulverauftrag auch eine Bürste verwenden.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Energieeintragseinrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer pulverförmigen Aufbaumaterialschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt bevorzugt über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt. Anschließend wird der Querschnitt des herzustellenden Objekts 2 von dem Laserstrahl 22 abgetastet, sodass das pulverförmige Aufbaumaterial 15 an Stellen verfestigt wird, die dem Querschnitt des herzustellenden Objekts 2 entsprechen. Dabei werden die Pulverkörner an diesen Stellen durch die durch die Strahlung eingebrachte Energie teilweise oder vollständig aufgeschmolzen, so dass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

Auch wenn die vorliegende Erfindung anhand einer Lasersinter- bzw. Laserschmelzvorrichtung beschrieben wurde, ist sie insofern nicht auf das Lasersintern oder Laserschmelzen eingeschränkt, als der in Fig. 3 gezeigte spezifische Aufbau einer Lasersinter- oder -schmelzvorrichtung für die vorliegende Erfindung nur beispielhaft ist und natürlich auch abgewandelt werden kann, insbesondere bei Verwendung einer anderen Belichtungsvorrichtung als der gezeigten.

Die Energieeintragseinrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Energieeintragseinrichtung jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt einen Strahl abzulenken kann die Energie auch mittels eines Zeilenbelichters oder einer Maskenbelichtung dem Aufbaumaterial zugeführt werden.

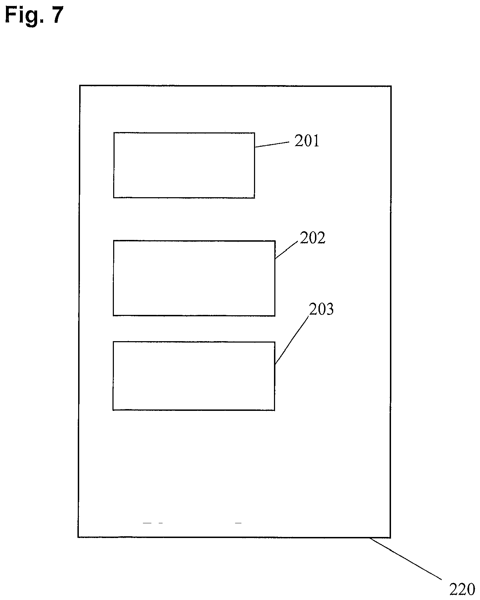

In Fig. 7 ist schematisch eine Vorrichtung 220 zur erfindungsgemäßen Bereitstellung eines Steuerbefehlssatzes gezeigt. Die Vorrichtung 220 in Fig. 7 kann dabei einerseits Bestandteil der Steuereinheit 29 sein, beispielsweise als Softwaremodul, das auf der Steuereinheit 29 installiert ist, andererseits kann die Vorrichtung 220 aber auch als von der Steuereinheit 29 getrenntes Modul vorhanden sein, welches mit der Steuereinheit 29 für einen Datenaustausch verbunden ist. Weiterhin muss die Vorrichtung 220 nicht räumlicher Bestandteil der additiven Herstellvorrichtung sein, sondern kann auch außerhalb von dieser angeordnet sein, beispielsweise als Softwaremodul, das auf einer Datenverarbeitungsanlage installiert ist, die über eine Datenverbindung mit der additiven Herstellvorrichtung verbunden sein.

Die Vorrichtung 220 zur Bereitstellung eines Steuerbefehlssatzes enthält zunächst eine Bereitstellungseinheit 201, die im Betrieb einen Parametersatz, der aus einer endlichen Anzahl an Parametern besteht, und eine Konstruktionsvorschrift bereitstellt, die geeignet sind, das mindestens eine Objekt geometrisch zu beschreiben. Mit dem Begriff "Bereitstellung" ist gemeint, dass die Bereitstellungseinheit 201 den Parametersatz und die Konstruktionsvorschrift beispielsweise aus einem Speicher liest und/oder von einer Eingabevorrichtung entgegennimmt, an welcher ein Nutzer entsprechende Daten eingibt. Eine Dateneingabevorrichtung, an der ein Nutzer den Parametersatz und/oder die Konstruktionsvorschrift eingeben kann, kann entweder an der additiven Herstellvorrichtung vorhanden sein oder aber räumlich getrennt von der additiven Herstellvorrichtung, jedoch mit dieser und insbesondere mit der Vorrichtung 220 über eine Datenverbindung verbunden sein. Die genaue Implementierung der Dateneingabeschnittstelle kann in üblicher Weise geschehen, insbesondere auch unter Zuhilfenahme grafischer Elemente auf einem Anzeigebildschirm.

Weiterhin enthält die Vorrichtung 220 zur Bereitstellung eines Steuerbefehlssatzes eine Schichtenmodell-Erzeugungseinheit 202, die im Betrieb ein computerbasiertes Schichtenmodell des durch den Parametersatz und die Konstruktionsvorschrift beschriebenen mindestens einen Objekts erzeugt, indem für jede Schicht die Lage und Gestalt eines Querschnitts des Objekts in dieser Schicht ermittelt wird.

Schließlich enthält die Vorrichtung 220 noch eine Steuerbefehlssatz-Erzeugungseinheit 203, die im Betrieb einen Steuerbefehlssatz für eine additive Herstellvorrichtung erzeugt, durch den die Herstellung des mindestens einen dreidimensionalen Objekts auf der Grundlage des Schichtenmodells implementiert wird. Dabei greift die Steuerbefehlssatz-Erzeugungseinheit 203 auf das von der Schichtenmodell-Erzeugungseinheit 202 erzeugte Schichtenmodell zurück.

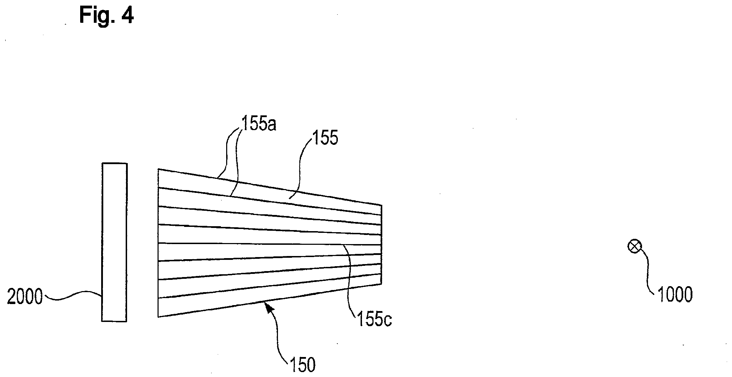

Während in Fig. 1 ein Streustrahlenraster gezeigt ist, dessen Kanäle geradlinig verlaufen, ist es von besonderem Vorteil, wenn die Kanäle eine Neigung in Bezug auf die Strahlungsquelle 1000 aufweisen, wie nachfolgend anhand von Fig. 4 erläutert wird.

Fig. 4 zeigt sehr schematisch einen Aufbau, wie er typischerweise in einer Röntgenvorrichtung vorliegen kann, wobei jedoch das zu untersuchende Objekt 1020 nicht dargestellt ist. In Fig. 4 ist ein Streustrahlenraster 150 zwischen einer Röntgenquelle 1000 und dem Detektor 2000 gezeigt. Von dem Streustrahlenraster sind dabei aus Gründen der besseren Anschaulichkeit die parallel zur Zeichenebene verlaufenden Wände nicht gezeigt. Eine Draufsicht auf die rechte Seite des Streustrahlenrasters 150, an der die Strahlung in dieses eintritt, wäre sehr ähnlich (nahezu identisch) der Ansicht in Fig. 1. Fig. 4 ist außerdem nicht maßstabsgetreu. Der Abstand zwischen Röntgenquelle 1000 und Detektor 2000 kann in der Praxis beispielsweise 200 mm betragen. Die Höhe h des Streustrahlenrasters 150 kann in der Praxis beispielsweise 20 mm betragen.

Die von der annähernd punktförmigen Röntgenquelle 1000 emittierten Strahlen besitzen einen gewissen Öffnungswinkel, so dass sie nicht zueinander parallel sind. Damit diese Strahlen die Kanäle des Streustrahlenrasters geradlinig durchdringen können, sollten die Wände des Streustrahlenrasters 150 analog zu den Strahlen des sich aufweitenden Strahlenbündels ausgerichtet sein, d.h. im Wesentlichen parallel zu diesen, so dass von der Röntgenquelle 1000 bei nicht vorhandenem Objekt 1020 emittierte Strahlen möglichst ohne Wechselwirkung durch das Streustrahlenraster hindurchtreten. Im Fachjargon wird dies dadurch zum Ausdruck gebracht, dass die Wände als "fokussiert" bezeichnet werden. Wie in Fig. 4 angedeutet, sind damit die Wände 155a der Kanäle 155 des Streustrahlenrasters 150 nicht parallel zueinander, sondern unter einem geringfügigen Winkel gegeneinander geneigt. In Fig. 4 liegt die Wand 155c des Streustrahlenrasters 150 horizontal in der Zeichenebene und man erkennt, dass unterschiedliche Wände 155a unterschiedliche Winkel mit der Wand 155c einschließen.

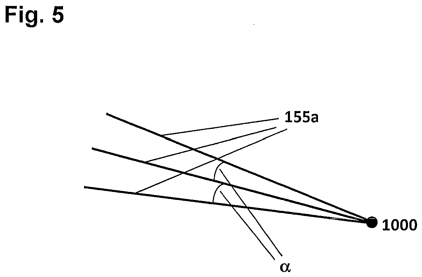

Während die Herstellung solch eines "fokussierten" Streustrahlenrasters mittels eines herkömmlichen Verfahrens kompliziert ist, ergibt sich für die Herstellung mittels eines additiven Herstellverfahrens keine besondere zusätzliche Schwierigkeit gegenüber einem geraden Streustrahlenraster. Insbesondere durch die erfindungsgemäße Beschreibung der Geometrie des Streustrahlenrasters mittels einer Konstruktionsvorschrift und eines Parametersatzes kann ein fokussiertes Streustrahlenraster auf einfache Weise dadurch beschrieben werden, dass der Winkel α spezifiziert wird, den zwei benachbarte Wände gegeneinander einnehmen. Dies entspricht einer Drehung der Wände um eine Drehachse, welche in Fig. 4 in der Mitte der Röntgenquelle 1000 senkrecht durch die Zeichenebene hindurchtritt. Der Sachverhalt ist in Fig. 5 schematisch veranschaulicht.

Es sei bemerkt, dass anstelle oder zusätzlich zu einem Winkel zwischen zwei benachbarten Wänden in Fig. 4 es in dem Streustrahlenraster 150 auch zwischen benachbarten Wänden, die auf den Wänden 155a senkrecht stehen, einen von 0° verschiedenen Winkel geben kann. Würde man in Fig. 4 in der Zeichenebene von oben oder unten auf das Streustrahlenraster 150 blicken, so erhielte man in diesem Fall eine im Wesentlichen zur Ansicht von Fig. 4 ähnliche Ansicht. Die Ansicht wäre identisch, wenn der Winkel zwischen zwei benachbarten Wänden der gleiche wie in Fig. 4 wäre, was jedoch nicht zwangsläufig so sein muss.

Weiterhin sind in den Figuren 1 und 4 die Strahlungseintritts- und austrittsflächen der entsprechenden Streustrahlenraster zwar eben dargestellt, jedoch muss dies nicht so sein. Die Kanäle 155 der gezeigten Streustrahlenraster könnten je nach Problemstellung z.B auch unterschiedliche Höhen h aufweisen. Alternativ oder zusätzlich könnte die Strahlungseintrittsfläche (also die der Strahlungsquelle zugewandte Seite des Streustrahlenrasters) konkav sein und/oder die Strahlungsaustrittsfläche (also die dem Detektor zugewandte Seite des Streustrahlenrasters) konvex sein. Beispielsweise könnte die Anordnung der Kanäle 155 gleicher Höhe (oder auch nicht gleicher Höhe) so sein, dass die der Strahlungsquelle zugewandten Enden der Kanäle 155 alle den gleichen Abstand zur Strahlungsquelle aufweisen. Dies gilt für Fig. 4, aber auch für den Fall von Fig. 1.

Für die Herstellung des Streustrahlenrasters in einer additiven Herstellvorrichtung sind verschiedene besondere Vorgehensweisen möglich, die auch beliebig miteinander kombiniert werden können:
Bei der Herstellung des Streustrahlenrasters kann man zur Erzielung von sehr dünnen Wänden, d.h. linienförmigen Elementen, das Aufbaumaterial im Bereich der Wände dadurch verfestigen, dass man den Strahldurchmesser der Auftrefffläche eines zur Verfestigung verwendeten Strahls auf die Aufbaumaterialschicht im Wesentlichen gleich der Wanddicke wählt. In solch einem Fall lassen sich sehr geringe Wanddicken auf einfache Art und Weise realisieren. Durch ein geradliniges Verfahren des Energie- bzw. Laserstrahls entlang einer Wand kann durch einmaliges Abfahren des Wandquerschnitts der Wandquerschnitt verfestigt werden. Ein geradliniges Verfahren ist insbesondere deshalb möglich, weil infolge der erfindungsgemäßen Beschreibung der Wand mittels einer Konstruktionsvorschrift und eines Parametersatzes keine Eckpunkte einer Triangulation vorhanden sind, die zu einer "ZickZack"-Bewegung führen würden. Als Folge kann eine Wand mit gleichförmiger Dicke realisiert werden.

Bei der soeben beschriebenen Herstellung von dünnen Wänden wird die Wanddicke im Wesentlichen durch die dem Aufbaumaterial pro Flächeneinheit zugeführte Strahlungsenergie und/oder die Abmessung des Auftreffbereichs des Strahls senkrecht zur Bewegungsrichtung des Strahls festgelegt. Beispielsweise kann man für eine gegebene Abmessung des Auftreffbereichs des Strahls senkrecht zur Bewegungsrichtung des Strahls die Bestrahlungsstärke einstellen, um den Energieeintrag in das Aufbaumaterial im Bereich des Wandquerschnitts und damit die Dicke der Wand einzustellen. Man kann jedoch auch einen Strahl verwenden, dessen Auftreffbereich einen Durchmesser aufweist, der geringer als die intendierte Wanddicke ist. Solch ein Strahl wird dann nicht nur einmalig über die der Wand entsprechenden Stellen einer Baumaterialschicht bewegt, sondern mehrmals, beispielsweise zweimalig oder dreimalig. Durch das mehrfache Überfahren des Aufbaumaterials wird mehr Energie in das Material eingetragen und entsprechend wächst auch die Dicke der Wand.

Zusammengefasst können also Wanddicken auf einfache Weise innerhalb eines Objekts variiert werden durch Ändern des Strahldurchmessers oder der Bestrahlungsstärke oder mehrmaliges Bestrahlen. Insbesondere gilt dies auch für sehr filigrane bzw. dünne Wände.

Weiterhin kann man bei der additiven Herstellung eines Streustrahlenrasters dieses so orientieren, dass die Kanäle während der Herstellung vertikal ausgerichtet sind, also im Wesentlichen senkrecht zur Bauebene liegen. In letzterem Fall lassen sich auch auf einfache Weise Stützstrukturen für die Wände des Streustrahlenrasters herstellen, wobei die Stützstrukturen eine Verbindung zwischen dem Streustrahlenraster und der Bauplattform in der additiven Herstellvorrichtung schaffen. Dabei können Stützstrukturen von Wänden ebenfalls wandartig ausgebildet werden, jedoch mit grö-ßerer Wanddicke als die zu unterstützenden Wände des Streustrahlenrasters. Dies ist von Vorteil, da die Stützstrukturen das Gewicht des herzustellenden Streustrahlenrasters tragen müssen.

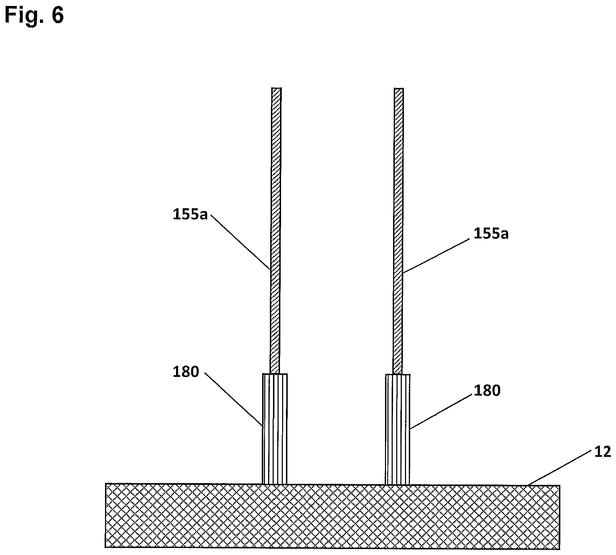

Fig. 6 veranschaulicht solch ein Vorgehen. In Fig. 6 ist ein vertikaler Querschnitt senkrecht zum Wandverlauf durch zwei Wände 155a eines Streustrahlenrasters gezeigt, die von Stützwänden 180 unterstützt werden, welche ihrerseits auf der Bauplattform 12 angeordnet sind. Die größere Wanddicke bei der Stützstruktur kann dabei wiederum durch die bereits beschriebenen Maßnahmen realisiert werden, wie z.B eine Einstellung der Bestrahlungsstärke, des Durchmessers des Strahlauftreffbereichs beim Verfestigen, etc. Es sei noch bemerkt, dass das beschriebene Vorgehen auch auf fokussierte Streustrahlenraster anwendbar ist. Letztere lassen sich so in der additiven Herstellvorrichtung anordnen, dass zumindest die zentralen Kanäle, also die zentral in der Eintrittsfläche für die Röntgenstrahlung liegenden Kanäle, vertikal ausgerichtet sind, d.h. senkrecht zur Bauebene 7 liegen.

Wenn bei der Herstellung eines Streustrahlenrasters in einer Lasersinter- oder - Schmelzvorrichtung das Streustrahlenraster 150 so angeordnet ist, dass die Kanäle 155 senkrecht zur Bauebene 7 liegen oder (bei einem fokussierten Streustrahlenraster), zumindest einige Kanäle 155 senkrecht zur Bauebene 7 liegen, ist es von Vorteil, wenn das Streustrahlenraster 150 möglichst zentral unterhalb der Strahlablenkvorrichtung angeordnet wird, bevorzugt so, dass sich die Strahlablenkvorrichtung zentral (in gleicher Weise wie später die Strahlungsquelle 1000) oberhalb dem herzustellenden Streustrahlenraster befindet. Damit ist jedoch nicht gemeint, dass die Strahlablenkvorrichtung den gleichen Abstand zum herzustellenden Streustrahlenraster haben soll wie die (Röntgen-)Strahlungsquelle 1000 bei der Verwendung des Streustrahlenrasters. Vielmehr ist damit die Anordnung der Strahlablenkvorrichtung in einer Ebene, welche im Wesentlichen parallel zur Bauebene 7 ist, gemeint. Durch eine derartige Anordnung des Streustrahlenrasters während der Herstellung erhöht sich die Symmetrie des Streustrahlenrasters beim Gebrauch in einer Röntgenvorrichtung, was Verzerrungen der mittels der Röntgenstrahlung abzubildenden Strukturen verringert.

Ein erfindungsgemäß herzustellendes Streustrahlenraster kann natürlich auch andere Geometrien aufweisen als die weiter oben konkret beschriebenen, beispielsweise eine andere Höhe oder aber andere Abmessungen eines Kanalquerschnitts.

## Patentansprüche

1. Herstellverfahren zur Herstellung mindestens eines dreidimensionalen Objekts (2) mittels einer additiven Herstellvorrichtung (1), wobei in der additiven Herstellvorrichtung (1) das mindestens eine Objekt (2) Schicht für Schicht hergestellt wird durch Verfestigung eines Aufbaumaterials (15) an den dem Querschnitt eines Objekts in einer Schicht entsprechenden Stellen, wobei die Herstellvorrichtung für den Herstellungsvorgang durch einen Steuerbefehlssatz angesteuert wird, das Herstellverfahren umfassend die Schritte:
- Bereitstellen eines Parametersatzes, der aus einer Anzahl an Parametern besteht, und einer Konstruktionsvorschrift, die geeignet ist, zumindest einen Abschnitt des Objekts (2) mittels des Parametersatzes geometrisch als eine Anzahl von linienförmigen oder flächigen Elementen im Raum zu beschreiben, wobei der geometrisch beschriebene Abschnitt des Objekts (2) zumindest innerhalb einer Schicht allein aus linienförmigen Elementen zusammengesetzt ist,
- Erzeugen eines computerbasierten Schichtenmodells des Abschnitts des Objekts (2), indem für jede Schicht die Lage und Gestalt eines Querschnitts des Abschnitts des Objekts (2) in dieser Schicht ermittelt wird,
- Erzeugen des Steuerbefehlssatzes für die additive Herstellvorrichtung (1), durch den die Herstellung des Abschnitts des Objekts auf der Grundlage des Schichtenmodells implementiert wird,
- Verfestigen des Aufbaumaterials (15) indem dem Aufbaumaterial (15) mittels eines elektromagnetischen Strahlbündels (22) oder Teilchenstrahlbündels Wärmeenergie zugeführt wird, wobei das oder die linienförmigen Elemente in Richtung des Linienverlaufs mit dem elektromagnetischen Strahlbündel (22) oder Teilchenstrahlbündel ein- oder mehrmals abgetastet werden.

2. Herstellverfahren nach Anspruch 1, bei dem die Konstruktionsvorschrift eine ein- oder mehrmalige Verschiebung eines linienförmigen oder flächigen Elements in einer ersten Raumrichtung und/oder in einer auf der ersten Raumrichtung senkrecht stehenden, zweiten Raumrichtung spezifiziert.

3. Herstellverfahren nach einem der vorangehenden Ansprüche, bei dem zumindest ein Parameter eine Randbedingung bei der Verwendung des fertig gestellten Objekts (2) spezifiziert.

4. Herstellverfahren nach einem der vorangehenden Ansprüche, wobei der Abschnitt des Objekts (2) ein Kollimator mit einer Mehrzahl von zur Blockierung von Strahlung verwendeten Rasterelementen ist, und die Konstruktionsvorschrift für die geometrische Beschreibung des Kollimators die folgenden Parameter verwendet: die Anzahl der Rasterelemente oder den Abstand derselben zueinander oder den Abstand der Strahlungsquelle von der Detektoranordnung.

5. Herstellverfahren nach Anspruch 4, wobei es sich bei dem Kollimator um ein Streustrahlenraster für den Einsatz in einer Röntgeneinrichtung handelt und die Rasterelemente zueinander parallele ebene Wände oder Zylinderflächenabschnitte sind.

6. Herstellverfahren nach Anspruch 4, wobei es sich bei dem Kollimator um ein Streustrahlenraster für den Einsatz in einer medizinischen Röntgeneinrichtung handelt und die Rasterelemente eine Mehrzahl von Stäben oder ebenen Wänden oder Zylinderflächenabschnitten sind, welche gemäß der Konstruktionsvorschrift analog zu den Strahlen des von der Röntgenquelle in Richtung der Detektoranordnung emittierten Strahlenkegels ausgerichtet sind.

7. Herstellverfahren nach einem der vorangehenden Ansprüche, wobei das Schichtenmodell dynamisch erzeugt wird, wobei für mindestens eine Schicht die Lage und Gestalt eines Querschnitts des Abschnitts des Objekts in dieser Schicht erst nach Beginn des Herstellverfahrens ermittelt werden.

8. Herstellverfahren nach einem der vorangehenden Ansprüche, bei dem die Breite eines linienförmigen Elements nach dessen Verfestigung eingestellt wird durch Einstellen der mittleren Energiedichte pro Flächeneinheit im Auftreffbereich des Strahlbündels (22), durch Einstellen einer Abmessung des Strahlbündels (22) in Richtung der Breite des linienförmigen Elements und/oder durch Einstellen der Geschwindigkeit, mit der das elektromagnetische Strahlbündel (22) oder Teilchenstrahlbündel das linienförmige Element in Richtung des Linienverlaufs abtastet.

9. Herstellverfahren nach einem der vorangehenden Ansprüche, bei dem für die Verfestigung des Aufbaumaterials ein gepulster Laser verwendet wird.

10. Herstellverfahren nach Anspruch 9, bei dem durch Abändern der Pulsfrequenz, der Pulshöhe oder des Taktverhältnisses die Strahlleistung zeitlich und örtlich variiert wird.

11. Herstellverfahren nach einem der Ansprüche 8 bis 10, bei dem eine additive Herstellvorrichtung (1) verwendet wird, in der die Verfestigung des Aufbaumaterials (15) mittels eines auf dieses gerichteten elektromagnetischen Strahlbündels (22) oder Teilchenstrahlbündels bewirkt wird,
wobei das auf das Aufbaumaterial (15) auftreffende elektromagnetische Strahlbündel (22) oder Teilchenstrahlbündel einen maximalen Durchmesser von kleiner oder gleich 500 µm aufweist.

12. Herstellverfahren nach Anspruch 11, bei dem als Aufbaumaterial (15) ein polymerhaltiges Pulver verwendet wird und das elektromagnetische Strahlbündel (22) mittels eines Kohlenmonoxidlasers erzeugt wird.

13. Herstellverfahren nach Anspruch 11, bei dem als Aufbaumaterial (15) ein metallhaltiges und/oder keramikhaltiges Pulver verwendet wird und das elektromagnetische Strahlbündel (22) oder Teilchenstrahlbündel so auf das Aufbaumaterial (15) einwirkt, dass ein Wärmeleitungsschweißprozess stattfindet.

14. Herstellverfahren nach einem der Ansprüche 11 bis 13, bei dem das auf das Aufbaumaterial (15) auftreffende Strahlbündel (22) oder Teilchenstrahlbündel einen maximalen Durchmesser von kleiner oder gleich 30 µm aufweist.

15. Computerprogramm, das eine Abfolge von Befehlen umfasst, welche bei ihrer Ausführung auf einer additiven Herstellvorrichtung (1) das Ausführen eines Herstellungsverfahren nach einem der Ansprüche 1 bis 14 bewirkt.

## Claims

1. A manufacturing method for manufacturing at least one three-dimensional object (2) by means of an additive manufacturing apparatus (1), wherein in the additive manufacturing apparatus (1) the at least one object (2) is manufactured layer by layer by solidifying a construction material (15) at the locations corresponding to the cross section of an object in a layer, wherein for the manufacturing process the manufacturing apparatus is controlled by a control command set, the manufacturing method comprising the steps:
- Providing a parameter set consisting of a number of parameters and a design specification that is able to specify geometrically by means of the parameter set at least one portion of the object (2) as a number of line-shaped or planar elements in space, wherein at least within one layer the geometrically specified portion of the object (2) is composed solely of line-shaped elements,
- Generating a computer-based layer model of the portion of the object (2) by determining for each layer the location and shape of a cross-section of the portion of the object (2) in this layer,
- Generating the control command set for the additive manufacturing apparatus (1), by which control command set the manufacturing of the portion of the object based on the layer model is implemented.
- Solidifying the construction material (15) by supplying heat energy to the construction material (15) by means of an electromagnetic beam (22) or particle beam, wherein the line-shaped element(s) is/are scanned with the electromagnetic beam (22) or particle beam one or more times along the course of the line.

2. The manufacturing method according to Claim 1, wherein the design specification specifies a single or multiple displacement of a line-shaped or planar element in a first spatial direction and/or in a second spatial direction that is perpendicular to the first spatial direction.

3. The manufacturing method according to one of the preceding claims, wherein at least one parameter specifies a boundary condition in the use of the finished object (2).

4. The manufacturing method according to one of the preceding claims, wherein the portion of the object (2) is a collimator having a plurality of grid elements used to block radiation, and wherein the design specification for the geometric specification of the collimator uses the following parameters: the number of grid elements or the distance of the same to each other or the distance of the radiation source from the detector arrangement.

5. The manufacturing method according to claim 4, wherein the collimator is an anti-scatter grid for use in an X-ray apparatus and wherein the grid elements are flat walls or cylinder surface portions that are parallel to each other.

6. The manufacturing method according to claim 4, wherein the collimator is a anti-scatter grid for use in a medical X-ray apparatus and the grid elements are a plurality of rods or flat walls or cylinder surface portions, which are aligned according to the design specification in analogy to the rays of the ray cone emitted by the X-ray source towards the detector arrangement.

7. The manufacturing method according to one of the preceding claims, wherein the layer model is generated dynamically, wherein for at least one layer, the position and shape of a cross section of the portion of the object in this layer is determined only after the start of the manufacturing process.

8. The manufacturing method according to one of the preceding claims, wherein the width of a line-shaped element after its solidification is adjusted by adjusting the mean energy density per unit area in the impinging area of the beam (22), by adjusting a dimension of the beam (22) in the direction of the width of the
line-shaped element and/or by adjusting the speed at which the electromagnetic beam (22) or particle beam scans the line-shaped element in the direction of the line progression.

9. The manufacturing method according to one of the preceding claims, wherein for the solidification of the construction material, a pulsed laser is used.

10. The manufacturing method according to claim 9, wherein the beam power is varied in time and in space by changing the pulse frequency, the pulse amplitude or the duty ratio.

11. The manufacturing method according to one of claims 8 to 10, wherein an additive manufacturing apparatus (1) is used, in which the solidification of the building material is effected by means of an electromagnetic beam (22) or particle beam directed onto the same,
wherein the electromagnetic beam (22) or particle beam impinging on the construction material (15) has a maximum diameter of less than or equal to 500 µm.

12. The manufacturing method according to claim 11, wherein a polymer-containing powder is used as construction material (15) and wherein the electromagnetic beam (22) is generated by means of a carbon monoxide laser.

13. The manufacturing method according to claim 11, wherein a metal-containing and/or ceramic-containing powder is used as construction material (15) and wherein the electromagnetic beam (22) or particle beam acts on the construction material in such a way that a conduction mode welding process takes place.

14. The manufacturing method according to one of claims 11 to 13, wherein the electromagnetic beam (22) or particle beam impinging on the construction material (15) has a maximum diameter of less than or equal to 30 µm.

15. A computer program comprising a sequence of instructions by which, when they are executed in an additive manufacturing apparatus (1), a method according to any one of claims 1 to 14 is effectuated.

## Revendications

1. Procédé de fabrication pour fabriquer au moins un objet tridimensionnel (2) au moyen d'un dispositif de fabrication additive (1), dans lequel, dans le dispositif de fabrication additive (1), ledit au moins un objet (2) est fabriqué couche par couche en solidifiant un matériau de construction (15) aux positions correspondant à la section transversale d'un objet dans une couche, le dispositif de fabrication étant commandé pour l'opération de fabrication par un ensemble d'instructions de commande, le procédé de fabrication comprenant les étapes consistant à :
- fournir un jeu de paramètres se composant d'un certain nombre de paramètres, et d'une règle de construction appropriée pour décrire géométriquement au moins une section de l'objet (2) au moyen du jeu de paramètres comme un certain nombre d'éléments linéaires ou plats dans l'espace, la section décrite géométriquement de l'objet (2) étant composée uniquement d'éléments linéaires au moins à l'intérieur d'une couche,
- générer un modèle en couches de type informatique de la section de l'objet (2), en déterminant pour chaque couche la position et la forme d'une section transversale de la section de l'objet (2) dans cette couche,
- générer le jeu d'instructions de commande pour le dispositif de fabrication additive (1), par lequel la fabrication de la section de l'objet est mise en oeuvre sur la base du modèle en couches,
- solidifier le matériau de construction (15) en apportant de l'énergie thermique au matériau de construction (15) au moyen d'un faisceau électromagnétique (22) ou d'un faisceau de particules, le ou les éléments linéaires étant balayés une ou plusieurs fois dans le sens du tracé avec le faisceau électromagnétique (22) ou le faisceau de particules.

2. Procédé de fabrication selon la revendication 1, dans lequel la règle de construction spécifie un déplacement une ou plusieurs fois d'un élément linéaire ou plat dans une première direction spatiale et/ou dans une deuxième direction spatiale perpendiculaire à la première direction spatiale.

3. Procédé de fabrication selon l'une des revendications précédentes, dans lequel au moins un paramètre spécifie une condition limite lors de l'utilisation de l'objet fini (2).

4. Procédé de fabrication selon l'une quelconque des revendications précédentes, dans lequel la partie de l'objet (2) est un collimateur comportant une pluralité d'éléments de grille utilisés pour bloquer le rayonnement, et la règle de construction utilise les paramètres suivants pour la description géométrique du collimateur : le nombre d'éléments de grille ou la distance entre ceux-ci ou la distance entre la source de rayonnement et l'ensemble de détection.

5. Procédé de fabrication selon la revendication 4, dans lequel le collimateur est une grille de diffusion de rayonnement destinée à être utilisée dans un appareil à rayons X et les éléments de grille sont des parois planes parallèles entre elles ou des sections de surface cylindrique.

6. Procédé de fabrication selon la revendication 4, dans lequel le collimateur est une grille de diffusion de rayonnement destinée à être utilisée dans un appareil médical à rayons X et les éléments de la grille sont une pluralité de barres ou de parois planes ou de parties de surfaces cylindriques qui sont orientées, conformément à la règle de construction, de manière analogue aux rayons du cône de rayonnement émis par la source de rayons X en direction de l'ensemble détecteur.

7. Procédé de fabrication selon l'une des revendications précédentes, dans lequel le modèle en couches est généré de manière dynamique, la position et la forme d'une section transversale de la partie de l'objet dans cette couche n'étant déterminées qu'après le début du procédé de fabrication pour au moins une couche.

8. Procédé de fabrication selon l'une des revendications précédentes, dans lequel la largeur d'un élément en forme de ligne est réglée après sa solidification par réglage de la densité moyenne d'énergie par unité de surface dans la zone d'impact du faisceau de rayonnement (22), par réglage d'une dimension du faisceau de rayonnement (22) dans le sens de la largeur de l'élément en forme de ligne et/ou par réglage de la vitesse à laquelle le faisceau de rayonnement électromagnétique (22) ou le faisceau de particules balaye l'élément en forme de ligne dans le sens du tracé de la ligne.

9. Procédé de fabrication selon l'une quelconque des revendications précédentes, dans lequel on utilise un laser pulsé pour la solidification du matériau de construction.

10. Procédé de fabrication selon la revendication 9, dans lequel on fait varier dans le temps et dans l'espace la puissance du faisceau en modifiant la fréquence des impulsions, la hauteur des impulsions ou le rapport des impulsions.

11. Procédé de fabrication selon l'une des revendications 8 à 10, dans lequel on utilise un dispositif de fabrication additive (1) dans lequel la solidification du matériau de construction (15) est réalisée au moyen d'un faisceau de rayonnement électromagnétique (22) ou d'un faisceau de particules dirigé sur celui-ci,
le faisceau de rayonnement électromagnétique (22) ou le faisceau de particules incident sur le matériau de construction (15) présentant un diamètre maximal inférieur ou égal à 500 µm.

12. Procédé de construction selon la revendication 11, dans lequel on utilise comme matériau de construction (15) une poudre contenant un polymère et le faisceau électromagnétique (22) est généré au moyen d'un laser au monoxyde de carbone.

13. Procédé de fabrication selon la revendication 11, dans lequel on utilise comme matériau de construction (15) une poudre contenant du métal et/ou de la céramique et le faisceau électromagnétique (22) ou le faisceau de particules agit sur le matériau de construction (15) de telle sorte qu'un processus de soudage par conduction thermique soit réalisé.

14. Procédé de fabrication selon l'une quelconque des revendications 11 à 13, dans lequel le faisceau de rayonnement (22) ou le faisceau de particules incident sur le matériau de construction (15) présente un diamètre maximal inférieur ou égal à 30 microns.

15. Programme d'ordinateur comprenant une séquence d'instructions qui, lorsque exécutée sur un dispositif de fabrication additive (1), entraîne la mise en oeuvre d'un procédé de fabrication selon l'une quelconque des revendications 1 à 14.
